# EUROPEAN PATENT APPLICATION

(11) **EP 4 542 473 A1**
(43) Date of publication of application: **23.04.2025**
(21) Application number: 24201336.5
(22) Date of filing: 19.09.2024
(51) Int. Cl.: G06Q 20/00, G07G 1/12

(54) **GUIDE SYSTEM, MANAGEMENT DEVICE, AND METHOD FOR CONTROLLING MANAGEMENT DEVICE**

(30) Priority: 19.10.2023 JP 2023180327
(71) Applicant: Toshiba TEC Kabushiki Kaisha, Tokyo 141-8562 (JP)
(72) Inventor: Hiramatsu, Naotake, Tokyo, 141-8562 (JP)
(74) Representative: Bandpay & Greuter

(57) **Abstract**

In the mixed flow payment of the self use customers and the pre-registration customers, to guide the customers to appropriate checkout apparatuses without requiring personnel is made possible. In a guide system including a plurality of checkout apparatuses configured to use a first settlement method of performing registration and a settlement of a purchased article, and a second settlement method of performing a settlement of a purchased article pre-registered, the management device changes the checkout apparatus available for each of the settlement methods based on assignment of the first settlement method and the second settlement method to a method used in each of the checkout apparatuses set in advance, a priority order set in advance, an unoccupied status of the checkout apparatuses, and a settlement wait status in each of the first and second settlement methods, and makes the introduction device introduce the available checkout apparatus.

## Description

### FIELD

An embodiment of the present disclosure relates to a guide system, a management device, and a method for controlling a management device.

### BACKGROUND

In mass retailers such as a supermarket, an introduction of a self-service checkout apparatus in which a customer him- or herself as a shopper performs article registration and checkout processing is in progress in checkout apparatuses, so-called cash registers. Therefore, in such self-service checkout apparatuses, there are proposed a variety of techniques for leading and guiding the customer who performs the article registration and the checkout processing to an unoccupied checkout apparatus.

Further, in recent years, a pre-registration system in which the customer him- or herself performs the article registration of purchased article in advance of checkout in a cash register using an information terminal which is attached to a shopping cart and is capable of reading an article code, or an information terminal which is provided with a scanning function for the customer him- or herself to perform reading of the article during shopping in a store is spreading. In this pre-registration system, it becomes possible to register the purchased article by scanning a code symbol, namely a so-called article barcode, attached to the article with a scanner provided to a tablet terminal or a camera provided to a smartphone using the information terminal such as the tablet terminal attached to the shopping cart or the smartphone carried by the customer him- or herself.

Due to the spread of such a pre-registration system, the case in which a customer who executed the pre-registration (hereinafter referred to as a pre-registration customer) also uses the same checkout apparatus as one used by a customer who uses the self-service checkout apparatus (hereinafter referred to as a self use customer), namely mixed flow payment of the pre-registration customers and the self use customers, is increasing.

In such mixed flow payment, the pre-registration customer is required to stand in the same line as the line of the self use customer who does not finish the article registration despite the pre-registration customer finishes the article registration in advance, and checkout-line stress occurs. In order to reduce the checkout-line stress of the pre-registration customer, it is conceivable to adopt a separate payment place layout in which a checkout apparatus dedicated to the pre-registration customer is provided to separate the checkout apparatus for the self use customer and the checkout apparatus dedicated to the pre-registration customer from each other. However, when such a separate layout is adopted, when a utilization rate of the pre-registration system is low, the checkout apparatus dedicated to the pre-registration customer is hardly used, and a return on investment (ROI) degrades. Further, by adopting the separate payment place layout, there arises a problem that it becomes necessary to arrange extra personnel for managing and leading the customers, and a gross profit per man-hour of a store degrades.

### DISCLOSURE OF THE INVENTION

To this end, a guide system, a management device, and a method for controlling a management device according to appended claims are provided.

The method may preferably comprise one or more of the following features :
step of making a first display surface display first display information representing the checkout apparatus available for the first settlement method;
step of making a second display surface display second display information representing the checkout apparatus available for the second settlement method;
a first checkout apparatus included in the checkout apparatuses available for the first settlement method, configured to accept a cash settlement and a cashless settlement, and a second checkout apparatus configured to accept only the cashless settlement;
step of using assignment of the cash settlement method, the cashless settlement method, and the second settlement method to a method used in each of the checkout apparatuses as the assignment set in advance; and/or
step of detecting the settlement wait status based on a first number of people waiting for the cash settlement, a second number of people waiting for the cashless settlement, and a third number of people waiting for the settlement with the second settlement method.

### DESCRIPTION OF THE DRAWINGS

FIG. 1 is a schematic configuration diagram showing a guide system according to a first embodiment.
FIG. 2 is a schematic diagram showing an example of a payment place to which the guide system is applied.
FIG. 3 is a block diagram showing a circuit configuration of an essential part of a store server as a management device according to the first embodiment included in the guide system.
FIG. 4 is a schematic diagram showing a principal data structure to be stored in a guide configuration table provided to the store server.
FIG. 5 is a schematic diagram showing a principal data structure to be stored in a terminal status table provided to the store server.
FIG. 6 is a block diagram showing a circuit configuration of an essential part of the checkout apparatus included in the guide system.
FIG. 7 is a schematic diagram showing an example of a camera-shot image which is obtained by a camera provided to the checkout apparatus.
FIG. 8 is a schematic diagram similarly showing an example of the camera-shot image.
FIG. 9 is a schematic diagram similarly showing an example of the camera-shot image.
FIG. 10 is a schematic diagram showing a principal data structure to be stored in an information terminal table provided to an information terminal server included in the guide system.
FIG. 11 is a sequence chart showing an operation outline related to an introduction of an unoccupied cash register in the guide system.
FIG. 12 is a first portion of a flowchart representing a procedure of an essential part of information processing to be executed by a processor of the store server.
FIG. 13 is a second portion of the flowchart.
FIG. 14 is a schematic diagram showing a principal data structure to be stored in the terminal status table provided to the store server.
FIG. 15 is a diagram showing a display example of a first display surface in a display device included in the guide system.
FIG. 16 is a diagram showing a display example of a second display surface in the same display device.
FIG. 17 is a schematic diagram showing an example of a payment place to which a guide system according to a second embodiment is applied.
FIG. 18 is a diagram showing a display example of first and second display surfaces in a display device included in the guide system according to the second embodiment.
FIG. 19 is a schematic configuration diagram showing a guide system according to a third embodiment.
FIG. 20 is a schematic diagram showing an example of a payment place to which the guide system according to the third embodiment is applied.
FIG. 21 is a schematic diagram showing a principal data structure of first to third configuration tables to be stored in a guide configuration table provided to a store server as a management device according to the third embodiment included in the guide system according to the third embodiment.
FIG. 22 is a flowchart representing a procedure of an essential part of information processing to be executed by a processor of the store server in the third embodiment.
FIG. 23 is a schematic diagram showing a principal data structure to be stored in the guide configuration table.

### DETAILED DESCRIPTION

A problem to be solved by the embodiments of the present disclosure is to provide a guide system, a management device, and a method for controlling the management device which make it possible to guide the customers to appropriate checkout apparatuses without requiring the personnel in the mixed flow payment of the self use customers and the pre-registration customers.

In one embodiment, a guide system is provided with a plurality of checkout apparatuses, an introduction device, and a management device. The checkout apparatus can use a first settlement method of performing registration of a purchased article and a settlement of the purchased article, and a second settlement method of performing a settlement of a purchased article which is pre-registered. The introduction device introduces an available checkout apparatus. The management device manages the introduction of the available checkout apparatus by the introduction device. In particular, the management device determines the checkout apparatus available for each of the first and second settlement methods based on assignment of the first settlement method and the second settlement method to a method used in each of the plurality of checkout apparatuses set in advance, a priority order set in advance, an unoccupied status of the checkout apparatuses, and a settlement wait status in each of the first and second settlement methods, and makes the introduction device introduce the available checkout apparatus.

Some embodiments of a checkout apparatus will hereinafter be described using the drawings.

### [First Embodiment]

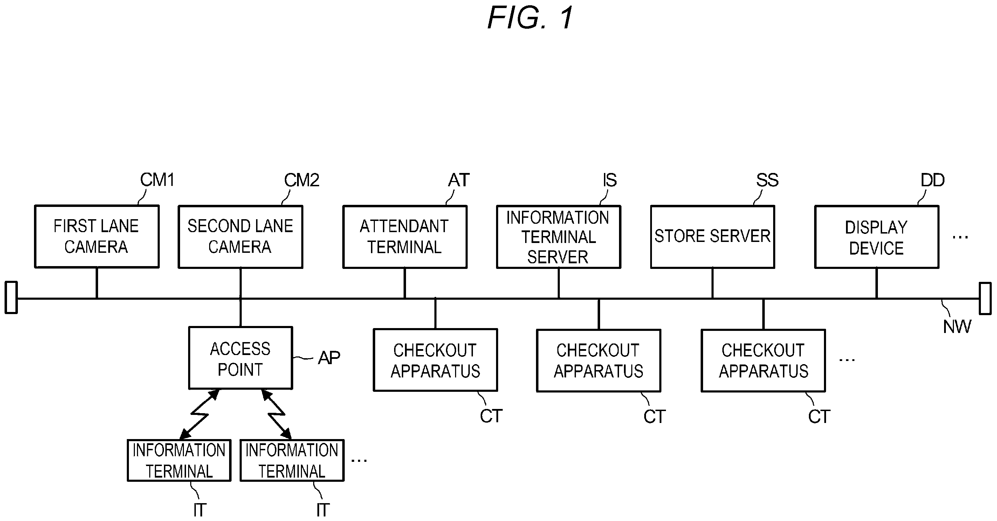

FIG. 1 is a schematic configuration diagram showing a guide system according to a first embodiment. The guide system according to the first embodiment is applied to a checkout system of a self-service type. The checkout system includes a store server SS as a management device according to the first embodiment, a plurality of checkout apparatuses CT, a plurality of information terminals IT, an access point AP, an information terminal server IS, and an attendant terminal AT, and is configured by connecting the store server SS, the checkout apparatuses CT, the access point AP, the information terminal server IS, and the attendant terminal AT to each other with a communication network NW such as a local area network (LAN). The information terminals IT are connected to the communication network NW via the access point AP. The guide system is configured by coupling a first lane camera CM1, a second lane camera CM2, and one or more display devices DD to the communication network NW in such a checkout system.

The store server SS provides a variety of services related to the checkout system to the checkout apparatuses connected with the communication network NW. Further, the store server SS transmits display information representing contents to be displayed on the display device DD to each of the display devices DD connected with the communication network NW.

The information terminals IT each include an information processing terminal which is attached to a shopping cart, and functions as a user interface for operations related to registration of purchased article, and a smartphone carried by the customer him- or herself. The information processing terminal is provided with a wireless unit. The information terminals IT perform wireless communication with the access point AP.

The access point AP relays communication with the devices connected to the communication network NW such as the store server SS, the information terminal server IS, the checkout apparatuses CT, and the information terminals IT. Just one access point AP is shown in FIG. 1, but two or more access points AP may be provided depending on a size of the store.

The checkout apparatuses CT are installed in the payment place as a checkout area of the store, and may be the self-service checkout apparatus which is operated by a shopper as a customer who finishes shopping. The shopper, namely a customer who puts the purchased article in a shopping basket or loads a shopping cart with the purchased article in a salesroom where articles are displayed, and then moves to the payment place, operates the checkout apparatus CT to perform registration processing of the purchased article, and checkout processing with respect to transaction data of the purchased article on which the article registration is performed, namely payment of the bill. The shoppers include the self use customer who performs the settlement related to the transaction from the registration to the payment by shopper him- or herself in such a manner. Further, the shoppers include the pre-registration customer who performs the article registration of the article to be purchased by the shopper him- or herself in advance using the information terminal IT when putting the purchased article in the shopping basket or loading the shopping cart with the purchased article, and then executes only the payment to the transaction data of the purchased article in the checkout apparatus CT. It should be noted that the checkout apparatus can be reworded as a settlement terminal, a payment device, a payment terminal, and so on.

The information terminal server IS executes the registration of the purchased article receiving an article scanning result transmitted from the information terminals IT of the pre-registration customers via the access point AP, to manage the pre-registration content of the purchased article with respect to each of the information terminals IT.

The attendant terminal AT is a terminal which is operated by a sales clerk as an attendant. The attendant terminal AT displays a list of the purchased articles which are registered in each of the checkout apparatuses CT or the like on a display device. Further, when an error occurs in any of the checkout apparatuses CT, the attendant terminal AT announces information of that error. The attendant monitors the checkout apparatuses CT based on the information displayed in the attendant terminal AT, or the information thus announced.

The first lane camera CM1 and the second lane camera CM2 can each be a video camera for taking a moving image, or can also be a still camera for taking a still image. In the case of the still camera, the first lane camera CM1 and the second lane camera CM2 perform shooting at regular intervals. The first lane camera CM1 and the second lane camera CM2 transmit the camera images thus taken to the store server SS via the communication network NW.

The display device DD is a display device such as a liquid crystal display. The display device DD displays display information which is transmitted from the store server SS, and which is for performing display for introducing a device which is available at the present moment in the checkout apparatuses included in the checkout system to the shoppers who are going to check out. The display device DD is an example of an introduction device for introducing the available checkout apparatus. Therefore, the introduction device can be rephrased as displaying the display information for performing display for introducing the available checkout apparatus. It can be said that the introduction device performs the display showing an unoccupied cash register (a device which is not used, namely an unoccupied device) corresponding to the settlement method.

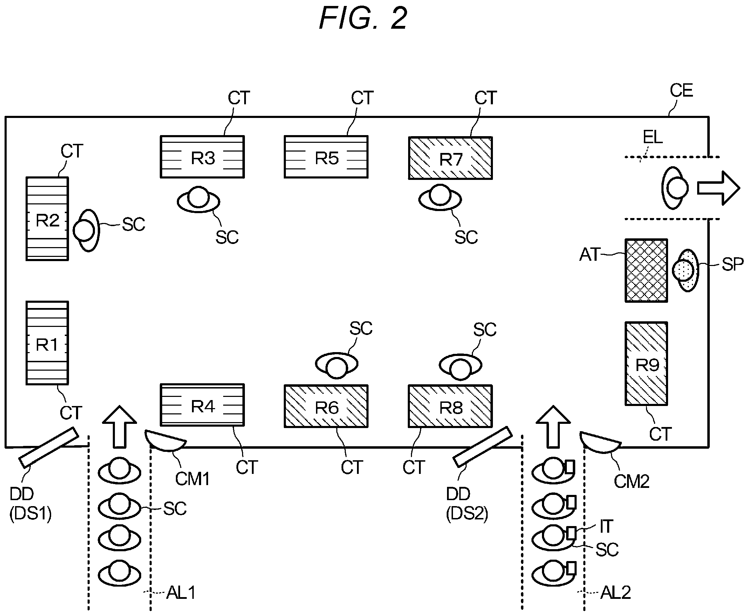

FIG. 2 is a schematic diagram showing an example of a payment place CE to which the guide system is applied. In the example shown in FIG. 2, nine self-service checkout apparatuses are installed as the checkout apparatuses CT in the payment place CE. Although not limited thereto, the configuration and the operation are hereinafter described based on the number and the installation layout of the checkout apparatuses CT in the payment place CE.

In the payment place CE, an entrance for the self use customers and an entrance for the pre-registration customers are set separately from each other, and exits thereof are set commonly to the both customers. In the entrance for the self use customers, a first entrance lane AL1 in which the shoppers SC as the self use customers stand for checkout is disposed. The first entrance lane AL1 is an example of a first standby lane for a first settlement method for performing the registration of the purchased article and the settlement of the purchased article with a customer operation. Further, in the entrance for the pre-registration customers, a second entrance lane AL2 in which the shoppers SC as the pre-registration customers stand for checkout is disposed. The second entrance lane AL2 is an example of a second standby lane for a second settlement method for performing the settlement of the purchased article which is pre-registered with information terminal operations by, for example, customers. In the exit, an exit lane EL passed by the shoppers SC who complete the checkout is disposed.

Further, in the payment place CE, a first lane camera CM1 is installed so as to correspond to the first entrance lane AL1. The first lane camera CM1 shoots the self use customers who wait for checkout. The store server SS is capable of detecting the number of the self use customers who wait for checkout based on the camera-shot images obtained by the first lane camera CM1. The first lane camera CM1 is an example of a first sensor for detecting the number of customers who wait for settlement with the first settlement method.

Similarly, in the payment place CE, a second lane camera CM2 is installed so as to correspond to the second entrance lane AL2. The second lane camera CM2 shoots the pre-registration customers who wait for checkout. The store server SS is capable of detecting the number of the pre-registration customers who wait for checkout based on the camera-shot images obtained by the second lane camera CM2. The second lane camera CM2 is an example of a second sensor for detecting the number of customers who wait for settlement with the second settlement method.

Further, in the payment place CE, one display device DD is installed so as to correspond to the first entrance lane AL1, and another display device DD is installed so as to correspond to the second entrance lane AL2. It can also be said that the display devices DD are arranged one by one in the entrance of the self use customer and the entrance of the pre-registration customer. In other words, FIG. 2 shows an example when the display devices DD are each the introduction device which introduces the available checkout apparatus to the customer.

It should be noted that cash register numbers R1 to R9 for uniquely identifying the respective checkout apparatuses CT are assigned to the nine checkout apparatuses CT. The cash register numbers R1 to R9 can be assigned as appropriate by the administrator of the store server SS.

A sales clerk SP is assigned to the attendant terminal AT.

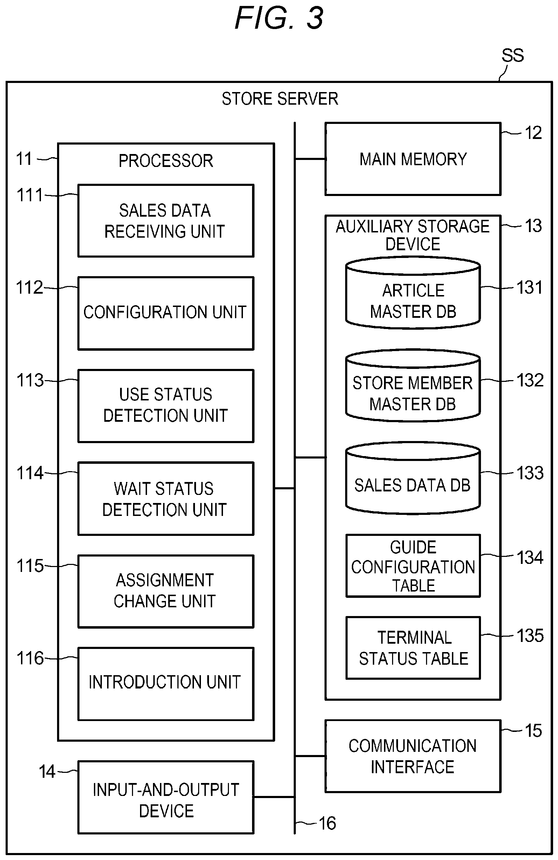

FIG. 3 is a block diagram showing a circuit configuration of an essential part of the store server SS. The store server SS is provided with a processor 11, a main memory 12, an auxiliary storage device 13, an input-and-output device 14, a communication interface 15, and a system transmission path 16. The system transmission path 16 includes an address bus, a data bus, control signal lines, and so on. The system transmission path 16 couples the processor 11 and other units to each other directly, or via a signal input-and-output circuit, and transmits data signals which are mutually received or transmitted therebetween. The processor 11, the main memory 12 and the auxiliary storage device 13 are coupled to each other with the system transmission path 16 to thereby configure a computer of the store server SS.

The processor 11 corresponds to a central portion of the computer described above. The processor 11 controls each unit so as to realize a variety of types of functions as the store server SS with an operating system or a control program. The processor 11 is, for example, a central processing unit (CPU). The processor 11 can also be, for example, a micro processing unit (MPU), a system on a chip (SoC), a digital signal processor (DSP), a graphics processing unit (GPU), an application specific integrated circuit (ASIC), a programmable logic device (PLD), or a field-programmable gate array (FPGA). Alternatively, the processor 11 can be what is obtained by combining some of these with each other.

The main memory 12 corresponds to a main storage portion of the computer described above. The main memory 12 includes a nonvolatile memory area and a volatile memory area. The main memory 12 stores the operating system or the control program in the nonvolatile memory area. The main memory 12 stores data which is necessary for the processor 11 to execute processing for controlling each unit in the nonvolatile memory area or the volatile memory area in some cases. The main memory 12 uses the volatile memory area as a work area in which data is rewritten as appropriate by the processor 11. The nonvolatile memory area is, for example, a read only memory (ROM). The volatile memory area is, for example, a random access memory (RAM).

The auxiliary storage device 13 corresponds to an auxiliary storage portion of the computer described above. For example, an electrically erasable programmable read-only memory (EEPROM), a hard disc drive (HDD), or a solid state drive (SSD) may be the auxiliary storage device 13. The auxiliary storage device 13 stores data which is used by the processor 11 when performing a variety of types of processing, data which is generated by the processing in the processor 11, and so on. The auxiliary storage device 13 stores the control program described above in some cases.

The input-and-output device 14 is a user interface including input equipment such as a keyboard or a mouse, and display equipment such as a liquid crystal display. It should be noted that the store server SS is not necessarily required to have the input-and-output device 14. As the user interface on this occasion, it is possible to use a management terminal not shown which is capable of making communication via a communication network NW using the communication interface 15. The management terminal may include, for example, a personal computer, a smartphone, or a tablet computer.

The communication interface 15 performs data communication in compliance with a communication protocol set in advance with an external device which is connected via the communication network NW and the access point AP. The external device is, for example, the checkout apparatuses CT, the information terminals IT, the information terminal server IS, the attendant terminal AT, the first and second lane cameras CM1, CM2, or the display device DD.

The store server SS is provided with an article master database 131, a store member master database 132, a sales data database 133, a guide configuration table 134, and a terminal status table 135 in the auxiliary storage device 13. In FIG. 3, a database is abbreviated as DB.

The article master database 131 stores data related to articles to be sold in the store. The article master database 131 stores article data such as an article code, an article name, a unit price, and a class name taking one article as one record. The article code is a unique code set for each article in order to individually identify the article.

The store member master database 132 stores data related to customers who registered as members such as point members, namely so-called affiliates. The store member master database 132 includes data of, for example, a member ID taking one member as one record. Personal information such as gender, age, name, address, and contact of the member may be included. The member ID is a unique code set for each member in order to individually identify the member. The member owns a recording medium on which the member ID is recorded. The recording medium is, for example, a magnetic card, a contact integrated circuit (IC) card, a noncontact IC card, or a smartphone. The purchaser can appreciate a benefit as the member by inputting the member code into the checkout apparatus CT at any timing before making payment, namely settlement, on the checkout apparatus CT. Regarding an input method of the member code, reading from the medium by the shopper SC with a scanner or a reader provided to the checkout apparatus CT or the information terminal IT, reception of information stored in the smartphone as the information terminal IT, and so on are available, and the input method is not particularly limited.

The sales data database 133 stores the sales data generated in the transactions which is transmitted from each of the checkout apparatuses CT when the settlement is completed, namely when the transaction is completed. The sales data database 133 stores transaction data representing a transaction content of an article as a settlement target, and settlement data related to the settlement of that transaction taking one transaction as one record. The transaction data includes an article name (article code) and a price of the article subjected to the settlement, a total amount of the articles, and so on. The settlement data includes a deposit amount paid by the purchaser, an amount of change, and so on when the payment was made in cash, or includes information of the payment method when cashless payment was made. Further, the sales data may include elements such as a member code, a corporate code (corporate name) representing a company which operates the store, a store code (store name), a phone number of the store, an address thereof, transaction time and date, a transaction number (receipt number), a cash register number, and a name of the person in charge. It should be noted that the elements included in the sales data are not limited to these examples, and may include other elements, and elements such as the phone number and the address may also be eliminated.

In the checkout apparatus CT, for example, by reading a code symbol printed on or attached to an article with a scanner to obtain the article code, and then reading article data of the article identified by the article code from an article data file provided to the checkout apparatus CT, and then registering the article data in the transaction data, the sales data including the transaction data and the settlement data is updated and then stored. The article data file may be a copy of the article master database 131. Alternatively, the checkout apparatus CT performs, for example, near field communication with the information terminal IT or obtains the member code from the recording medium with a scanner to thereby identify the information terminal IT, and then requests the information terminal server IS to transmit the article data pre-registered using that information terminal IT. Then, the checkout apparatus CT receives the article data which is pre-registered, and which is transmitted from the information terminal server IS, and then registers the article data thus received to the transaction data to thereby update the sales data including the transaction data and the settlement data, and then stores the sales data.

Further, when the member code is obtained from the recording medium with the scanner, the checkout apparatus CT confirms whether the member code is registered in a store member data file provided to the checkout apparatus CT, and when the member code is registered, the checkout apparatus CT adds the member code to the transaction data as the store member code to thereby update and then store the sales data. When the settlement process is completed, namely when one transaction is completed, the checkout apparatus CT prints the sales data on a sheet to thereby issue a paper receipt corresponding to one transaction, and at the same time, transmits the sales data corresponding to the one transaction to the store server SS. The sales data database 133 stores the sales data transmitted from each of the checkout apparatuses CT in such a manner.

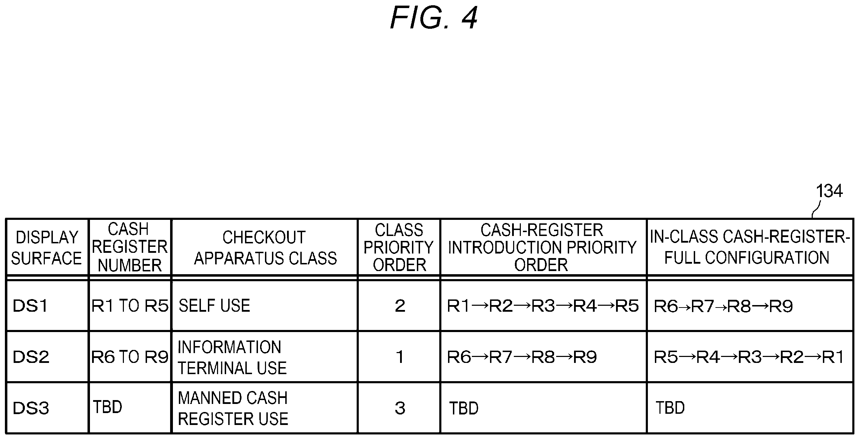

The guide configuration table 134 stores a variety of configurations related to an introduction display of an unoccupied cash register input in advance by the administrator. FIG. 4 is a schematic diagram showing a principal data structure to be stored in this guide configuration table 134. It should be noted that the data structure shown in FIG. 4 is illustrative only. As long as the information necessary for the processor 11 can be obtained, the format is not particularly limited.

As shown in FIG. 4, the guide configuration table 134 stores a display surface, the cash register number, a class priority order, a cash-register introduction priority order, and an in-class cash-register-full configuration, for example, for each checkout apparatus class. The checkout apparatus class represents a type to which the checkout apparatus CT is assigned. The checkout apparatus class is an example of assignment of the first settlement method and the second settlement method to a method used in each of the checkout apparatuses CT set in advance. In the example in FIG. 4, the checkout apparatus classes include self use, information terminal use, and manned cash register use.

The display surface means an introductory display surface of the display device DD for introducing an unoccupied cash register to the shoppers in the payment place CE. Display surfaces DS1 to DS3 shown in FIG. 4 are each identification information for identifying the display surface of the display device DD in the present embodiment. The display device DD and the display surface may have a one-to-one relationship, or one display device DD may also be associated with two or more display surfaces assuming that there is adopted a display method in which a display screen is divided into a plurality of parts to achieve a split screen. In the present embodiment, the display device DD and the introductory display surface have a one-to-one relationship. Therefore, the display surface may be reworded as the display device. In the example in FIG. 4, the display device DD installed so as to correspond to the first entrance lane AL1 in which the self use customers stand for checkout is set as a first display surface DS1, and the display device DD installed so as to correspond to the second entrance lane AL2 in which the pre-registration customers stand for checkout is set as a second display surface DS2.

It should be noted that although the three display surfaces DS1 to DS3 are set in FIG. 4, since the number of the display devices DD installed in the payment place CE is two as shown in FIG. 2, the processor 11 ignores the configuration regarding a third display surface DS3. Obviously, it is possible to add one more display device DD to apply the configuration regarding the third display surface DS3 to the display device DD thus added.

The cash register number is an identifier assigned to the checkout apparatus CT in each of the checkout apparatus classes. The example in FIG. 4 corresponds to an installation layout of the payment place CE as shown in FIG. 2. Specifically, the cash register numbers of the checkout apparatuses CT assigned to the self use are R1 to R5, the cash register numbers of the checkout apparatuses CT assigned to the information terminal use are R6 to R9, and no checkout apparatus CT is assigned to the manned cash register use, and no cash register number is set.

The class priority order represents a priority order related to the classes of the checkout apparatuses CT. The class priority order is an example of a priority order of the settlement method. FIG. 4 shows when an order of the self use, the information terminal use, and the manned cash register use is designated as the class priority order.

The cash-register introduction priority order represents a priority order of the checkout apparatus CT regarding which one of the checkout apparatuses CT is introduced first when there are two or more unoccupied cash registers. The cash-register introduction priority order is an example of a priority order in the assignments set in advance. In the example in FIG. 4, an order of the cash register number R1, the cash register number R2, the cash register number R3, the cash register number R4, and the cash register number R5 is set as the cash-register introduction priority order in the checkout apparatuses CT assigned to the self use. Further, an order of the cash register number R6, the cash register number R7, the cash register number R8, and the cash register number R9 is set as the cash-register introduction priority order in the checkout apparatuses CT assigned to the information terminal use. It should be noted that since no checkout apparatus CT is assigned to the manned cash register use, the cash-register introduction priority order remains unset.

When the cash registers assigned for each of the checkout apparatus classes become full, the cash register assigned to another class is used as the cash register for that class as long as the number of the customers who wait for checkout in that class is equal to or larger than a prescribed number. In that case, the in-class cash-register-full configuration represents an order of the cash registers to newly be assigned to that class. When the cash registers assigned for each of the checkout apparatus classes is full means in other words that there is no unoccupied cash register. In other words, all of the checkout apparatuses assigned are all in use. The in-class cash-register-full configuration is an example of a full-state priority order set in advance. In the example in FIG. 4, an order of the cash register number R5, the cash register number R4, the cash register number R3, the cash register number R2, and the cash register number R1 as the numbers of the checkout apparatuses CT assigned to the self use is set as the configuration when the checkout apparatuses CT assigned to the information terminal use which is the highest in the class priority order are full. Further, in the example in FIG. 4, an order of the cash register number R6, the cash register number R7, the cash register number R8, and the cash register number R9 as the numbers of the checkout apparatuses CT assigned to the information terminal use is set as the configuration when the checkout apparatuses CT assigned to the self use which has the subsequent priority are full. It should be noted that since no checkout apparatus CT is assigned to the manned cash register use, the in-class cash-register-full configuration also remains unset.

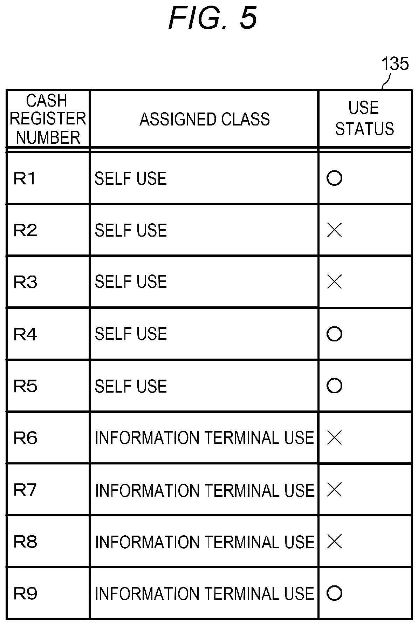

The terminal status table 135 stores a use status at the present moment with respect to each of the checkout apparatuses CT. FIG. 5 is a schematic diagram showing a principal data structure to be stored in this terminal status table 135. It should be noted that the data structure shown in FIG. 5 is illustrative only. As long as the information necessary for the processor 11 can be obtained, the format is not particularly limited.

As shown in FIG. 5, the terminal status table 135 stores an assigned class and the use status, for example, for each of the cash register numbers.

The assigned class represents what class the checkout apparatus CT with that cash register number currently operates as.

The use status represents whether the checkout apparatus CT with that cash register number is currently in use. In this use status, a round mark represents that the checkout apparatus CT is not in use, namely unoccupied, and an X mark represents that the checkout apparatus CT is in use. FIG. 5 shows a status of the payment place CE shown in FIG. 2. Specifically, the example of the terminal status table 135 in FIG. 5 represents the status in which the checkout apparatuses CT with the cash register numbers R2 and R3 are in use, and the checkout apparatuses CT with the cash register numbers R1, R4, and R5 are unoccupied with respect to the checkout apparatuses CT assigned to the self use. Further, the example of the terminal status table 135 in FIG. 5 represents the status in which the checkout apparatuses CT with the cash register numbers R6, R7, and R8 are in use, and the checkout apparatus CT with the cash register number R9 is unoccupied with respect to the checkout apparatuses CT assigned as the information terminal use.

Then, each unit to be installed in the processor 11 of the store server SS will be described. The processor 11 implements, for example, a sales data receiving unit 111, a configuration unit 112, a use status detection unit 113, a wait status detection unit 114, an assignment change unit 115, and an introduction unit 116. The units installed in the processor 11 can also be referred to as functions. It can be said that the units installed in the processor 11 are installed in a control unit including the processor 11 and the main memory 12.

The sales data receiving unit 111 receives the sales data corresponding to one transaction which is transmitted from the checkout apparatus CT when the one transaction is completed with the communication interface 15. The sales data receiving unit 111 stores the transaction data thus received in the transaction data database 133.

The configuration unit 112 receives a variety of types of configuration information with respect to configuration items in the guide configuration table 134 due to an operation of the administrator of the store server SS using the input-and-output device 14. The configuration unit 112 stores the variety of types of configuration information thus received in the guide configuration table 134.

The use status detection unit detects the use status of each of the checkout apparatuses CT. The use status detection unit 113 is an example of a first detection unit which detects an unoccupied status of each of the checkout apparatuses CT which can use the first settlement method of performing the registration of the purchased article and the settlement of the purchased article with customer operations, and the second settlement method of performing the settlement of the purchased article which is pre-registered with operations of the information terminal IT by the customer. For example, in the present embodiment, as described later, the checkout apparatus CT is configured so as to transmit a human detection notice when there is a human in an operation range thereof. Therefore, the use status detection unit 113 can detect whether each of the checkout apparatuses CT is in use based on whether this human detection notice is received with the communication interface 15. The use status detection unit 113 stores the use status thus detected in the terminal status table 135.

The wait status detection unit 114 detects the number of the self use customers who stand in the first entrance lane AL1 for waiting for checkout based on, for example, the camera image from the first lane camera CM1, and then detects the wait status with respect to the self use checkout apparatus CT based on the number of the customers waiting thus detected. Similarly, the wait status detection unit 114 detects the number of the pre-registration customers who stand in the second entrance lane AL2 for waiting for checkout based on, for example, the camera image from the second lane camera CM2, and then detects the wait status with respect to the information terminal use checkout apparatus CT based on the number of the customers waiting thus detected. Further, regarding the wait status with respect to the information terminal use checkout apparatus CT, the wait status detection unit 114 inquires of the information terminal server IS about the number of the information terminals IT which declare that the registration is completed and then checkout is performed, and then detects the wait status based on the number in addition to or instead of the number of the customers waiting. The wait status detection unit 114 is an example of a second detection unit which detects a settlement wait status in each of the first and second settlement methods based on the number of the customers who wait for the settlement with the first settlement method and the number of the customers who wait for the settlement with the second settlement method.

The assignment change unit 115 changes the assigned class of each of the checkout apparatuses based on the use status of each of the checkout apparatuses stored in the terminal status table 135, the variety of configurations related to the introductory display of the unoccupied cash register stored in the guide configuration table 134, and the wait status of the self use checkout apparatus CT and the information terminal use checkout apparatus CT detected by the wait status detection unit 114. The details of the change in assigned class will be described later. The assignment change unit 115 is an example of an assignment unit which determines the checkout apparatus CT available for each of the first and second settlement methods based on the assignment of the first settlement method and the second settlement method to the method used in each of the checkout apparatuses CT set in advance, the priority order in the assignment set in advance, the full-state priority order set in advance, the unoccupied status of the checkout apparatus CT detected by the first detection unit, and the settlement wait status in each of the first and second settlement methods detected by the second detection unit. The assignment change unit 115 updates the assigned class of the terminal status table 135 with the assigned class thus changed.

The introduction unit 116 generates the display information for the introductory display to be displayed on the display surface of each of the classes set in the guide configuration table 134 in accordance with the assigned class stored in the terminal status table 135, and then transmits the display information to each of the display devices DD with the communication interface 15. The display information for the introductory display includes first introductory information representing the cash register number of the checkout apparatus CT which can be used by the self use customer, and second introductory information representing the cash register number of the checkout apparatus CT which can be used by the pre-registration customer. A specific example of the display information for the introductory display will be described later. The introduction unit 116 is an example of an output unit which outputs the first introductory information which is determined by the assignment unit, and which represents the checkout apparatus CT available for the first settlement method and the second introductory information which is determined by the assignment unit, and which represents the checkout apparatus CT available for the second settlement method to the display device DD as an external device.

It should be noted that the store server SS can be realized by, for example, using a general-purpose computer device for a server as hardware, and writing a control program into the main memory 12 or the auxiliary storage device 13. It should be noted that the control program may be stored in the main memory 12 or the auxiliary storage device 13 when delivering the store server SS, or may also be delivered separately from the general-purpose computer device described above. In the latter case, the control program is delivered as a removable recording medium such as a magnetic disc, a magnetooptic disc, an optical disc, or a semiconductor memory recording the control program, or is delivered via a network.

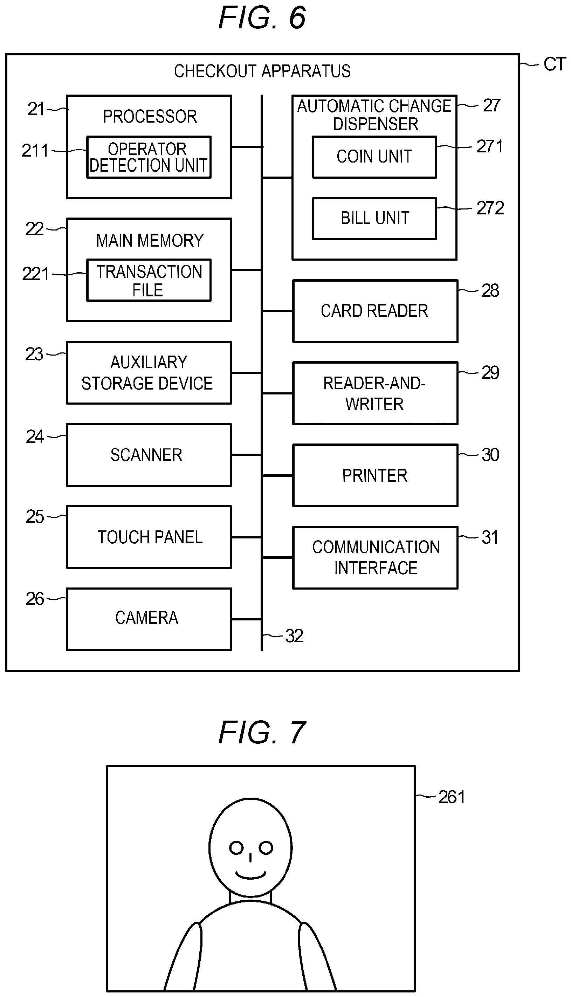

FIG. 6 is a block diagram showing a circuit configuration of an essential part of the checkout apparatus CT. The checkout apparatus CT is provided with a processor 21, a main memory 22, an auxiliary storage device 23, a scanner 24, a touch panel 25, a camera 26, an automatic change dispenser 27, a card reader 28, a reader and writer 29, a printer 30, a communication interface 31, a system transmission path 32, and so on. The system transmission path 32 includes an address bus, a data bus, control signal lines, and so on. The system transmission path 32 couples the processor 21 and other units to each other directly, or via a signal input-and-output circuit, and transmits data signals which are mutually received or transmitted therebetween. The processor 21, the main memory 22 and the auxiliary storage device 23 are coupled to each other with the system transmission path 32 to thereby configure a computer of the checkout apparatus CT.

The processor 21 corresponds to a central portion of the computer described above. The processor 21 controls each unit so as to realize a variety of types of functions as the checkout apparatus CT with an operating system or a control program. The processor 21 is, for example, a CPU. The processor 21 may be, for example, an MPU, an SoC, a DSP, a GPU, and ASIC, a PLD, or an FPGA. Alternatively, the processor 21 can be what is obtained by combining some of these with each other.

The main memory 22 corresponds to a main storage portion of the computer described above. The main memory 22 includes a nonvolatile memory area and a volatile memory area. The main memory 22 stores the operating system or the control program in the nonvolatile memory area. The main memory 22 stores data which is necessary for the processor 21 to execute processing for controlling each unit in the nonvolatile memory area or the volatile memory area in some cases. For example, the main memory 22 stores a transaction file 221. The transaction file 221 is a data file for storing the sales data corresponding to one transaction processed by the checkout apparatus CT. The main memory 22 uses the volatile memory area as a work area in which data is rewritten as appropriate by the processor 21. The nonvolatile memory area is, for example, a ROM. The volatile memory area is, for example, a RAM.

The auxiliary storage device 23 corresponds to an auxiliary storage portion of the computer described above. For example, an EEPROM, an HDD, or an SSD may be the auxiliary storage device 23. The auxiliary storage device 23 stores data which is used by the processor 21 when performing a variety of types of processing, data which is generated by the processing in the processor 21, and so on. For example, the auxiliary storage device 23 may store the article data file and the store member data file described above. The auxiliary storage device 23 stores the control program described above in some cases.

The scanner 24 reads the code symbol from the article. To each of the articles to be sold in a store, the code symbol obtained by coding an article ID or the like for identifying that article is attached. The code symbol is, for example, a barcode. The code symbol may be, for example, a two-dimensional data code. The scanner 24 may be of a type which reads the code symbol by scanning with a laser beam, or of a type which reads the code symbol from an image taken by an imaging device.

The touch panel 25 is configured by a display for displaying a variety of screens to the shopper SC who operate the checkout apparatus CT, and a touch sensor for detecting touch input to the screen by the shopper SC.

The camera 26 sets a terminal operating range as an imaging area, in which the shopper SC is assumed to be located in the terminal operating range when the shopper SC as the self use customer performs operations such as an operation of taking out a purchased article from a shopping basket or a shopping cart to make the scanner 24 scan the barcode of the purchased article, and an operation of making a payment with cash or a credit card. Thus, it is possible for the camera 26 to shoot the shopper SC who operates that checkout apparatus CT.

The automatic change dispenser 27 includes a coin unit 271 and a bill unit 272. The coin unit 271 sorts out coins dropped in a coin slot one by one to identify the denomination, and then houses the coins in a safe by denomination. The coin unit 271 takes out the coins of the corresponding denomination from the safe based on, for example, change data, and then pays them out to a coin dispensing port. The bill unit 272 sorts out bills inserted in a bill slot one by one to identify the denomination, and then houses the bills in the safe by denomination. The bill unit 272 takes out the bills of the corresponding denomination from the safe based on, for example, change data, and then pays them out to a bill dispensing port.

The card reader 28 reads card data recorded on a card medium such as a credit card or a reward card. The card reader 28 draws in the card medium inserted into a card slot inside the main body to read the card data, and then discharge the card medium from the card slot.

The reader-and-writer 29 performs reading and rewriting of electronic money recorded on an electronic money medium. The electronic money medium is, for example, a noncontact IC card. The electronic money medium may also be an electronic device such as a smartphone or a tablet terminal.

The printer 30 prints a receipt data representing a content of a business transaction or the like on a receipt form. The receipt form on which the receipt data is printed is discharged from an issue port, cut by a cutter, and then issued as a receipt or a voucher.

The communication interface 31 performs data communication in compliance with a communication protocol set in advance with an external device which is connected via the communication network NW. The external device is, for example, the store server SS, the information terminal server IS, the information terminal IT, the attendant terminal AT, or the like.

The processor 21 implements, for example, an operator detection unit 211 in addition to a well-known processing unit related to the article registration and the settlement. The units installed in the processor 21 can also be referred to as functions. It can be said that the units installed in the processor 21 are installed in a control unit including the processor 11 and the main memory 12.

The operator detection unit 211 detects presence or absence of the shopper SC as the operator who operates that checkout apparatus CT from the camera-shot images obtained by the camera 26 at regular time intervals. The operator detection unit 211 detects the presence or absence of a human using a human recognition technique such as a well-known face detection method.

FIG. 7 is a schematic diagram showing an example of the camera-shot image 261. As shown in FIG. 7, when the camera-shot image 261 on which a human shows up is taken, the operator detection unit 211 transmits a human detection notice to the store server SS with the communication interface 31 when the operator detection unit 211 detects that a human is present. It is possible for the use status detection unit 113 of the store server SS to detect that the checkout apparatus CT is in use based on this human detection notice as described above, to thereby store the status in the terminal status table 135.

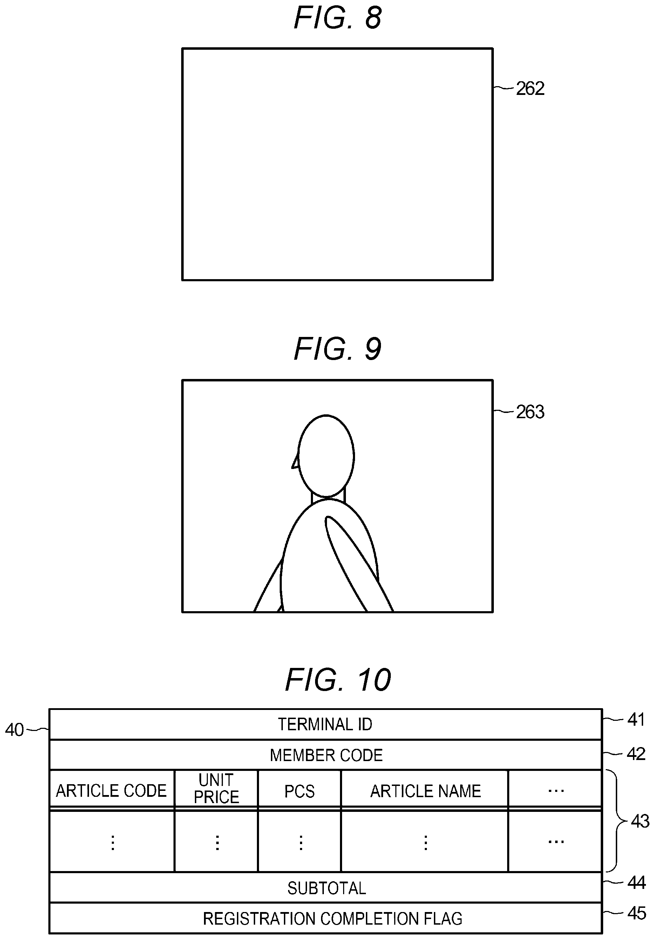

FIG. 8 and FIG. 9 are each a schematic diagram similarly showing an example of the camera-shot image. The operator detection unit 211 cannot detect a human from the camera-shot image 262 on which no human shows up as shown in FIG. 8 and the camera-shot image 263 on which a human passing in front of the checkout apparatus CT shows up as shown in FIG. 9. Therefore, in this case, the operator detection unit 211 does not transmit the human detection notice to the store server SS. Therefore, it is possible for the use status detection unit 113 of the store server SS to detect that the checkout apparatus CT from which no human detection notice is transmitted is not in use, namely is in the unoccupied status, to thereby store the status in the terminal status table 135.

Similarly to the store server SS, the information terminal server IS may also be provided with a processor, a main memory, an auxiliary storage device, an input-and-output device, a communication interface, and a system transmission path. Similarly to the store server SS, regarding the information terminal server IS, the input-and-output device can be eliminated. The auxiliary storage device may store the article data file and the store member data file. The main memory is provided with an information terminal table which stores information about the purchased article registered for each of the information terminal IT. The processor 11 communicates with each of the information terminals IT with the communication interface via the communication network NW and the access point AP to obtain the article code read in the information terminal IT, then reads the article data from the article data file with respect to the article identified by that article code, and then registers the article code in the information terminal table.

FIG. 10 is a schematic diagram showing a principal data structure to be stored in the information terminal table 40 for each of the information terminals IT provided to the information terminal server IS. The information terminal table 40 includes a terminal ID area 41, a member code area 42, at least one purchased article data area 43, a subtotal amount area 44, and a registration completion flag area 45. The terminal ID area 41 stores a terminal ID which is a code such as a terminal number for uniquely identifying the information terminal IT to which that information terminal table 40 corresponds. The member code area 42 stores the member code. The purchased article data area 43 stores the article data with respect to that article every time the shopper SC registers an article to be purchased on the information terminal IT. The article data consists of the article code, a unit price, the number of items to be purchased (pcs), an article name, a price, and an amount of tax of the purchased article which the shopper SC is going to buy. The subtotal amount area 44 corresponds to amount data representing a total amount of the prices and the tax amounts with respect to all the purchased articles which the shopper SC is going to buy, which is calculated based on the article data stored in the purchased article data area 43. This can be updated every time the shopper SC performs a registration operation of the article which the shopper SC is going to buy. The registration completion flag area 45 stores a registration completion flag. The registration completion flag is a flag which is set in response to reception of a payment instruction transmitted from the information terminal IT when the shopper SC completes the registration of all the purchased articles, and thus, declares the execution of checkout. The declaration of the execution of checkout can be made by the shopper SC operating, for example, a "payment" key displayed on the display screen of the touch panel provided to the information terminal IT or a physical button.

An operation of the guide system applied to the checkout system having such a configuration will hereinafter be described. It should be noted that an operation related to the checkout in the checkout system is the same as that in a well-known checkout system, and therefore, the description thereof will be omitted. Further, an operation related to setting to the guide configuration table 134 in the guide system is nothing but performing setting for each of the configuration items, and therefore, the description thereof will also be omitted. Therefore, an operation related to the introduction of the unoccupied cash register will be described here.

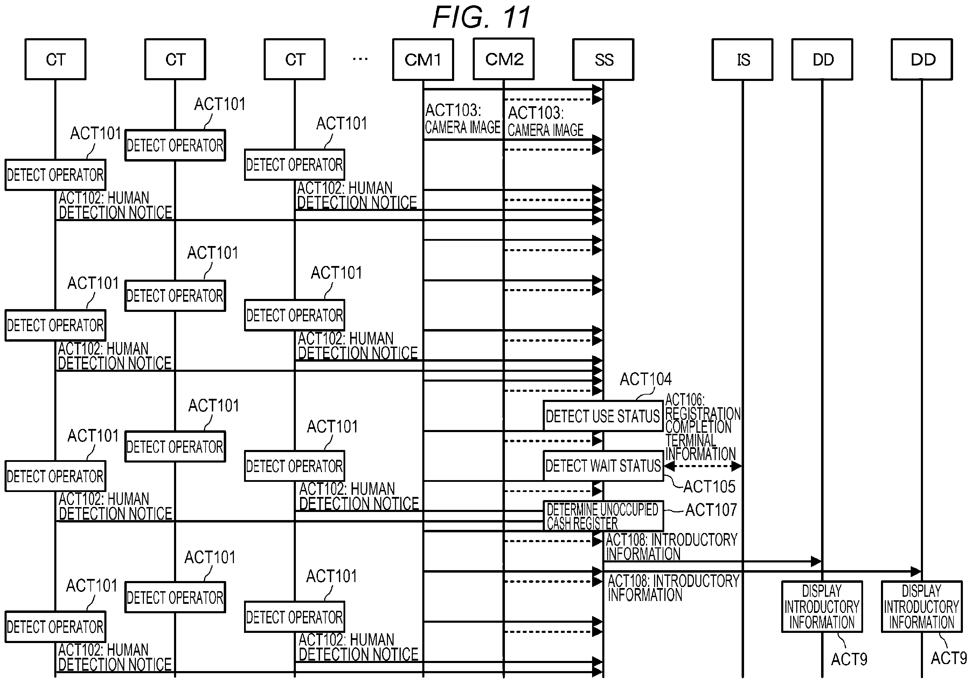

FIG. 11 is a sequence chart showing an operation outline related to the introduction of the unoccupied cash register in the guide system. As shown in FIG. 11, each of the checkout apparatuses CT performs (ACT101) operator detection processing for detecting presence or absence of a shopper SC as an operator at regular time intervals. The checkout apparatus which detects the presence of a human transmits (ACT102) the human detection notice to the store server SS. It should be noted that the operator detection processing is not required to be synchronized between the checkout apparatuses, and is executed at regular time intervals of respective timings.

Further, the first and second lane cameras CM1, CM2 also transmit the camera images to the store server SS at regular time intervals different from the regular time intervals in the checkout apparatuses CT. It should be noted that the transmission timing of the camera image is not required to be synchronized between the both cameras. Further, the regular time intervals may be the same in length as the regular time intervals in the checkout apparatuses CT.

In the store server SS, the use status of each of the checkout apparatuses CT is detected (ACT104) based on the human detection notice transmitted from each of the checkout apparatuses CT at regular time intervals different from the regular time intervals in each of the checkout apparatuses CT, and the first and second lane cameras CM1, CM2.

Further, the store server SS detects (ACT105) the wait status of the self use checkout apparatuses CT and the information terminal use checkout apparatuses CT based on the camera images transmitted from the first and second lane cameras CM1, CM2.

Alternatively, regarding the wait status with respect to the information terminal use checkout apparatus CT , it is possible for the store server SS to transmit a request for registration completion terminal information to the information terminal server IS, then receives (ACT106) the registration completion terminal information which is sent back from the information terminal server IS in response thereto, and then detects (ACT 105) the wait status of the information terminal use checkout apparatus CT based on that registration completion terminal information. The registration termination terminal information is information which represents the number of the information terminals IT in which the registration completion flag representing the termination of the registration of the article is set. Specifically, it is possible for the store server SS to assume the number of the completions of the pre-registration in the operations of the information terminals IT by the pre-registration customers as the number of the customers who wait for the settlement with the second settlement method to detect the settlement wait status with the second settlement method.

As described above, regarding the wait status of the information terminal use checkout apparatus CT, it is possible to use any of the camera image and the registration completion terminal information. Therefore, in FIG. 11, the fact that one of the camera image and the registration completion terminal information is optional is expressed by using dotted lines. Obviously, by using both of them, it is possible to increase the accuracy of the wait status of the information terminal use checkout apparatus CT.

In the store server SS, an unoccupied cash register which is available as the self use checkout apparatus CT and an unoccupied cash register which is available as the information terminal use checkout apparatus CT are determined (ACT 107) based on the wait status of the self use checkout apparatus CT and the wait status of the information terminal use checkout apparatus CT thus detected, the unoccupied state of each of the checkout apparatus CT thus detected, and the information stored in advance in the guide configuration table 134. Then, the store server SS transmits (ACT108) introductory information representing the unoccupied cash register thus determined to the display device DD.

The display device DD which receives the introductory information displays (ACT 109) the introductory information.

The operation of the store server SS in ACT104 to ACT108 will hereinafter be described in detail.

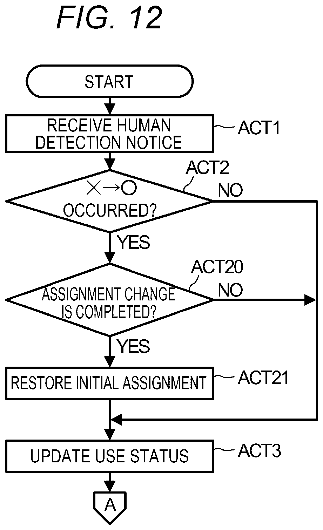

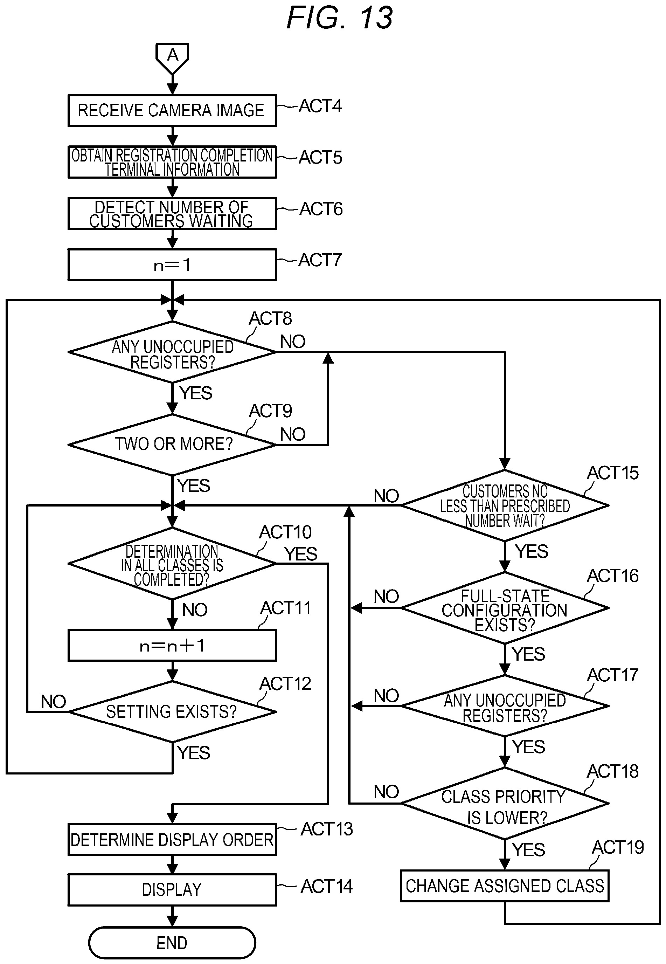

FIG. 12 and FIG. 13 are a series of flow charts representing a procedure of an essential part of the information processing executed by the processor 11 of the store server SS. The processor 11 executes this processing at regular time intervals such as every several seconds based on the control program stored in the main memory 12 or the auxiliary storage device 13. Here, the description is presented citing when a plurality of unoccupied cash registers is introduced if possible as illustrative only. It should be noted that the processing operation of the processor 11 makes the transition to ACT(x+1) after ACTx (x is a natural number) unless particularly described. Further, the procedure represented by FIG. 12 and FIG. 13 is illustrative only. The procedure is not particularly limited as long as substantially the same result can be obtained.

As ACT1, the use status detection unit 113 installed in the processor 11 receives the human detection notice transmitted from each of the checkout apparatuses CT with the communication interface 15.

As ACT2, the use status detection unit 113 determines whether there is the checkout apparatus CT which makes the transition to the unoccupied state from the in-use state in the checkout apparatuses CT from which the human detection notice is not received, namely the unoccupied cash registers. Specifically, the use status detection unit 113 confirms the use status of that cash register number in the terminal status table 135 with respect to each of the unoccupied cash registers from which the human detection notice is received, and then determines that the transition from the in-use state to the unoccupied state is made when the use status represents the in-use state. When the use status is already set to the unoccupied state, the use status detection unit 113 determines that the transition from the in-use state to the unoccupied state is not made. When there is the checkout apparatus CT which made the transition from the in-use state to the unoccupied state, the use status detection unit 113 determines YES in ACT2, and then proceeds to ACT20. When there is no checkout apparatus CT which made the transition from the in-use state to the unoccupied state, the use status detection unit 113 determines NO in ACT2, and then proceeds to ACT3.

As ACT3, the use status detection unit 113 updates the use status in the terminal status table 135 based on the human detection notice thus received.

As ACT4, the wait status detection unit 114 installed in the processor 11 receives the camera images transmitted from the first and second lane cameras CM1, CM2 with the communication interface 15.

As ACT5, the wait status detection unit 114 obtains the registration completion terminal information from the information terminal server IS. In other words, the wait status detection unit 114 transmits the request for the registration completion terminal information to the information terminal server IS with the communication interface 15. Then, the wait status detection unit 114 receives the registration completion terminal information which is sent back from the information terminal server IS in accordance with the request for the registration completion terminal information with the communication interface 15.

As ACT6, the wait status detection unit 114 detects the number of customers waiting based on the camera images thus received and the registration completion terminal information thus obtained. The method of detecting the number of customers from each of the camera images in the wait status detection unit 114 is not particularly limited. For example, by executing well-known dynamic body detection processing and pattern recognition processing on the camera image, it is possible to detect the number of customers who show up on the camera image. By storing the number of customers waiting thus detected in a temporary storage unit provided to the main memory 12, it is possible for the wait status detection unit 114 to hold the number of customers for subsequent processing.

As ACT7, the assignment change unit 115 installed in the processor initializes a value of an internal counter n to "1." The value of the internal counter n is used for designating the priority order of the class priority order in the guide configuration table 134. In other words, as a result, the assignment change unit 115 selects the checkout apparatus class in the class priority order in the guide configuration table 134 represented by the value of the internal counter n as a processing target.

As ACT8, the assignment change unit 115 determines whether there is an unoccupied cash register in the checkout apparatus class in the priority order represented by the value of the internal counter n. Specifically, the assignment change unit 115 obtains the checkout apparatus class in the priority order represented by the value of the internal counter n from the guide configuration table 134. Then, the assignment change unit 115 determines the presence or absence of an unoccupied cash register by determining whether there is the use status representing the unoccupied state in the use status of the cash register numbers to which the assigned class corresponding to that checkout apparatus class is assigned in the terminal status table 135. When there is no unoccupied cash register, the assignment change unit 115 determines NO in ACT8, and proceeds to ACT15. When there is an unoccupied cash register, the assignment change unit 115 determines YES in ACT8, and proceeds to ACT9.

As ACT9, the assignment change unit 115 determines whether the number of the unoccupied cash registers is two or more. When there is just one unoccupied cash register, the assignment change unit 115 determines NO in ACT9, and proceeds to ACT15. When there are two or more unoccupied cash registers, the assignment change unit 115 determines YES in ACT9, and proceeds to ACT10.

As ACT10, the assignment change unit 115 determines whether the status of the unoccupied cash register is determined with respect to all the classes in the guide configuration table 134. When the determination is completed in all the classes, the assignment change unit 115 determines YES in ACT10, and proceeds to ACT13. When the determination in all the classes is not completed, the assignment change unit 115 determines NO in ACT10, and proceeds to ACT11.

As ACT11, the assignment change unit 115 "increments" the value of the internal counter n. Thus, the assignment change unit 115 selects the checkout apparatus class in the subsequent class priority order in the guide configuration table 134 represented by the value of the internal counter n as the processing target.

As ACT12, the assignment change unit 115 determines whether there is a setting of the cash register number with respect to the checkout apparatus class in the priority order represented by the value of the internal counter n in the guide configuration table 134. When there is no setting of the cash register number, the assignment change unit 115 determines NO in ACT12, and proceeds to ACT10. When there is a setting of the cash register number, the assignment change unit 115 determines YES in ACT12, and proceeds to ACT8.

In such a manner, the assignment change unit 115 proceeds with the determination of the unoccupied cash register in sequence from the checkout apparatus class higher in class priority order in the guide configuration table 134 until the determination of the status of the unoccupied cash register is completed with respect to all the classes in the guide configuration table 134.

As ACT13, the introduction unit 116 installed in the processor 11 determines a display order of the unoccupied cash registers to be displayed on the display devices DD. Specifically, the introduction unit 116 determines the display order in each of the checkout apparatus classes in accordance with the status of the unoccupied cash register at the present moment stored in the terminal status table 135, and the cash-register introduction priority order and the in-class cash-register-full configuration set in advance in the guide configuration table 134.

As ACT14, the introduction unit 116 makes the display devices DD perform the introductory display representing the unoccupied cash registers. Specifically, the introduction unit 116 generates display information representing the unoccupied cash registers arranged in the display order thus determined for each of the checkout apparatus classes. Then, the display information is transmitted to each of the display devices DD with the communication interface 15 in accordance with the display surface set in the guide configuration table 134.

In such a manner, in each of the classes of the checkout apparatus, when there are two or more unoccupied cash registers, such display information as to introduce first the unoccupied cash register higher in priority in accordance with the cash-register introduction priority order set in advance in the guide configuration table 134 is generated, and thus, it is possible to display the display information thus generated on the respective display devices DD installed so as to correspond respectively to the first and second entrance lanes AL1, AL2 as the introductory display.

Further, as ACT15, the assignment change unit 115 installed in the processor 11 determines whether the number of the customers waiting, namely waiting for checkout, is no smaller than a prescribed number with respect to the checkout apparatus CT in the checkout apparatus class in the priority order represented by the value of the internal counter n. In other words, the assignment change unit 115 determines whether the number of the customers waiting with respect to that checkout apparatus CT out of the number of the customers waiting detected in ACT6 is no smaller than the prescribed number. When the number of the customers waiting is smaller than the prescribed number, the assignment change unit 115 determines NO in ACT15, and proceeds to ACT10. When the number of the customers waiting is no smaller than the prescribed number, the assignment change unit 115 determines YES in ACT15, and proceeds to ACT16.

As ACT16, the assignment change unit 115 determines whether there is a cash-register-full configuration. Specifically, the assignment change unit 115 determines whether the cash register number is set in the in-class cash-register-full configuration corresponding to the checkout apparatus class in the priority order represented by the value of the internal counter n in the guide configuration table 134. When the cash register number is set, the assignment change unit 115 can determine that there is the cash-register-full configuration. When there is no cash-register-full configuration, the assignment change unit 115 determines NO in ACT16, and proceeds to ACT10. When there is the cash-register-full configuration, the assignment change unit 115 determines YES in ACT16, and proceeds to ACT17.

As ACT17, the assignment change unit 115 determines whether any of the checkout apparatuses CT with the cash register numbers set in the in-class cash-register-full configuration is unoccupied. Specifically, the assignment change unit 115 determines whether the use status of that cash register number is in the unoccupied state in the terminal status table 135. When there is no unoccupied cash register, the assignment change unit 115 determines NO in ACT17, and proceeds to ACT10. When there is an unoccupied cash register, the assignment change unit 115 determines YES in ACT17, and proceeds to ACT18.

As ACT18, the assignment change unit 115 checks the guide configuration table 134 to determine whether the unoccupied cash register is the checkout apparatus CT which belongs to the class lower in class priority order. When the unoccupied cash register is not lower in class priority order, the assignment change unit 115 determines NO in ACT18, and proceeds to ACT10. When the unoccupied cash register is lower in class priority order, the assignment change unit 115 determines YES in ACT18, and proceeds to ACT 19.

As ACT19, the assignment change unit 115 changes the assigned class of the cash register number of the unoccupied cash register in the terminal status table 135 to that checkout apparatus class in the priority order represented by the value of the internal counter n in accordance with the in-class cash-register-full configuration in the guide configuration table 134. Subsequently, the assignment change unit 115 proceeds to ACT8.

By executing the processing in ACT8 to ACT 19 using the terminal status table 135 which is changed in such a manner, when there is no unoccupied cash register in the class of each of the checkout apparatuses CT, and the number of the customers who wait for checkout is no smaller than the prescribed number, such display information as to guide to use an unoccupied cash register in the class lower in priority as an unoccupied cash register in that class is generated in accordance with the cash-register introduction priority order and the in-class cash-register-full configuration set in advance in the guide configuration table 134, and thus, it is possible to display the display information as the introductory display on the respective display devices DD installed so as to correspond respectively to the first and second entrance lanes AL1, AL2.

Referring back to the description of FIG. 12, as ACT20, the assignment change unit 115 determines whether the change of the assigned class of the checkout apparatus CT in which the transition from the in-use state to the unoccupied state is made is completed. Specifically, the assignment change unit 115 confirms whether the assigned class of the cash register number of that checkout apparatus CT in the terminal status table 135 is the same as the configuration of the checkout apparatus class of the cash register number in the guide configuration table 134. Unless those coincide with each other, the assignment change unit 115 determines that the change in assigned class is completed. When the change in assigned class is not completed, the assignment change unit 115 determines NO in ACT20, and proceeds to ACT3. When the change in assigned class is completed, the assignment change unit 115 determines YES in ACT20, and proceeds to ACT21.

As ACT21, the assignment change unit 115 restores the assigned class thus changed to the initial assignment. Specifically, the assignment change unit 115 restores the assigned class of that checkout apparatus CT in the terminal status table 135 to the checkout apparatus class of the cash register number set in the guide configuration table 134. Subsequently, the assignment change unit 115 proceeds to ACT3.

A specific example of the unoccupied cash register introduction will hereinafter be described.

It is assumed that, for example, the use status of each of the cash registers becomes as in the terminal status table 135 shown in FIG. 5 in ACT3. This corresponds to the situation shown in FIG. 2. Here, first, due to the processing in ACT4 to ACT6, the number of the customers waiting for checkout is detected with respect to the checkout apparatuses CT in each of the checkout apparatus classes. Then, in ACT8, the presence or absence of an unoccupied cash register is determined with respect to the checkout apparatuses CT assigned to the information terminal use which is the highest in class priority order. In this case, since the checkout apparatus CT with the cash register number R6 exists as an unoccupied cash register, the process proceeds to ACT9 from ACT8. Further, since the number of the unoccupied cash registers is one in ACT9, the process proceeds to ACT 15 from ACT9 as a result.

In ACT15, the number of the customers waiting with respect to the checkout apparatuses CT of the information terminal use is determined. If the number of the customers waiting is no smaller than the prescribed number, the process proceeds to ACT16 from ACT15. In ACT16, since the in-class cash-register-full configuration of the information terminal use checkout apparatus CT is set in the guide configuration table 134, the process proceeds to ACT17 from ACT16. In ACT17, since it can be determined that the cash register numbers R1, R4, and R5 out of the cash register numbers R1 to R5 set in the guide configuration table 134 are unoccupied from the terminal status table 135, the process proceeds to ACT18 from ACT17. Further, in ACT18, it is determined that those unoccupied cash registers are the checkout apparatuses CT in the priority order lower than that class priority order, and the process proceeds to ACT19 from ACT18. Therefore, in ACT19, assigned class change processing for assigning the checkout apparatus CT with the cash register number R5 to the information terminal use is executed in accordance with the in-class cash-register-full configuration in the guide configuration table 134.

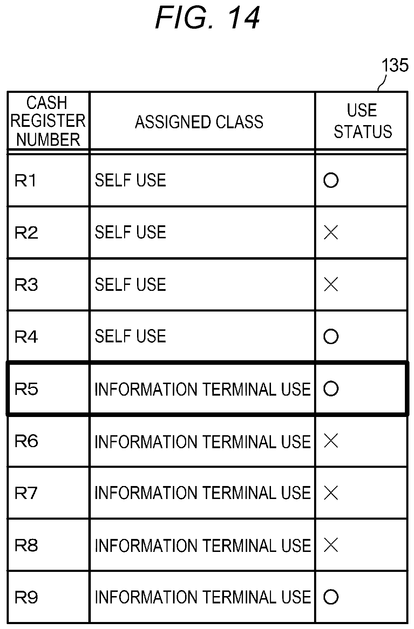

Thus, the storage content of the terminal status table 135 is rewritten from the state shown in FIG. 5 to what is shown in FIG. 14. FIG. 14 is a schematic diagram showing a principal data structure to be stored in the terminal status table 135. As shown in FIG. 14, the assigned class of the cash register number R5 is changed from the self use to the information terminal use.

Subsequently, when the process proceeds to ACT9 from ACT8, since the checkout apparatuses with the cash register numbers R6, R5 are unoccupied cash registers, the process proceeds to ACT10 from ACT9 as a result on the grounds that the number of the unoccupied cash registers is two or more. Further, in ACT10, since there is the checkout apparatus class the determination of which is not completed, the process proceeds to ACT11, and since the counter value is "incremented by 1," the checkout apparatus CT in which the class priority order is set to "2" in the guide configuration table 134, namely the checkout apparatus CT assigned to the self use in the example in FIG. 4, is selected as the subsequent processing target as a result.

In this case, in ACT12, since the setting of the cash register number with respect to the checkout apparatus class in the priority order represented by the value of the internal counter n is present in the guide configuration table 134, the process proceeds to ACT8, and the unoccupied cash register, the assigned class in the terminal status table 135 of which is the self use, is determined as a result. In the example of FIG. 2, it is determined that the cash register numbers R1, R4 are the unoccupied cash registers as shown in FIG. 14. The checkout apparatus CT with the cash register number R5 is assumed to be used as a substitute for the information terminal use checkout apparatus CT, and is therefore not included in the unoccupied cash registers here. Since there are two unoccupied cash registers, the process proceeds to ACT10 from ACT8 via ACT9. In ACT10, since there is the checkout apparatus class the determination of which is not completed, the process proceeds to ACT11, and since the counter value is "incremented by 1," the manned cash register use checkout apparatus CT in which the class priority order is set to "3" in the guide configuration table 134 is selected as the subsequent processing target as a result.

In this case, in ACT12, since it is determined that the setting of the cash register number with respect to the checkout apparatus class in the priority order represented by the value of the internal counter n is absent in the guide configuration table 134, the process proceeds to ACT10. Then, in ACT10, it is determined that there is no checkout apparatus class the determination of which is not completed, and the process proceeds to ACT13.

In ACT13, regarding the cash register numbers R1, R4 corresponding to the unoccupied cash registers as the checkout apparatuses CT assigned to the self use, the display order of the cash register number R1 and the cash register number R4 is determined in accordance with the cash-register introduction priority order in the guide configuration table 134. Further, regarding the cash register numbers R5, R9 corresponding to the unoccupied cash registers as the checkout apparatuses CT assigned to the information terminal use, the display order of the cash register number R9 and the cash register number R5 is determined in accordance with the cash-register introduction priority order and the in-class cash-register-full configuration in the guide configuration table 134. Then, in ACT14, the display information related to the unoccupied cash registers as the checkout apparatuses CT assigned to the self use, and the display information related to the checkout apparatuses CT assigned to the information terminal use are generated, and the respective pieces of the display information are transmitted to the respective display devices DD in accordance with the display surface set in the guide configuration table 134.

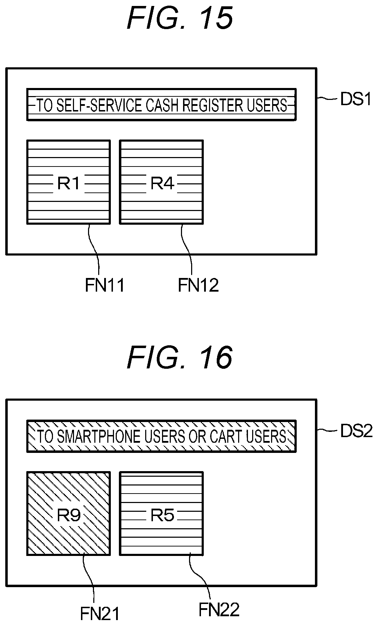

Thus, such introductory display as shown in FIG. 15 and FIG. 16 is performed. Here, FIG. 15 is a diagram showing a display example of the first display surface DS1 in the display device DD installed so as to correspond to the first entrance lane AL1 in which the shoppers SC as the self use customers stand for checkout. Further, FIG. 16 is a diagram showing a display example of the second display surface DS2 in the display device DD installed so as to correspond to the second entrance lane AL2 in which the shoppers SC as the pre-registration customers stand for checkout.

As shown in FIG. 15, on the first display surface DS1, two unoccupied cash register number displays FN11, FN12 as the first display information representing the checkout apparatuses CT which are available and are assigned to the self use are displayed side by side. As described above, the display device DD installed so as to correspond to the first entrance lane AL1 as the first standby lane for the first settlement method for performing the registration of the purchased article and the settlement of the purchased article with the customer operations is an example of a first display device which has the first display surface DS1, and is disposed in the first standby lane for the first settlement method out of the first and second standby lanes which are separately disposed respectively for the first settlement method and the second settlement method, and in which the customers wait for settlement. The unoccupied cash register number displays FN11, FN12 are an example of the first introductory information representing the checkout apparatuses CT as a first checkout apparatus which is available for the first settlement method.

Further, as shown in FIG. 16, on the second display surface DS2, two unoccupied cash register number displays FN21, FN22 as the second display information representing the checkout apparatuses CT which are available and are assigned to the information terminal use are displayed side by side. As described above, the display device DD installed so as to correspond to the second entrance lane AL2 as the second standby lane for the second settlement method for performing the settlement of the purchased article which is pre-registered with an operation of the information terminal IT by the customer is an example of a second display device which has the second display surface DS2, and is disposed on the second standby lane for the second settlement method. The unoccupied cash register number displays FN21, FN22 are an example of the second introductory information representing the checkout apparatuses CT as a second checkout apparatus which is available for the second settlement method.

It should be noted that it is assumed that the procedure of the information processing shown in FIG. 12 and FIG. 13 is executed at regular time intervals, and the regular time intervals can be set based on the time necessary for the move of the shopper SC. The time corresponds to the time necessary for the shopper SC to move from an entrance for the shopper SC as the self use customer and an entrance for the shopper SC as the pre-registration customer of the payment place CE which are exits of the first entrance lane AL1 and the second entrance lane AL2 to the farthest checkout apparatus CT of the checkout apparatuses which has a possibility of being displayed as the unoccupied cash register. In the example of FIG. 2, when it is assumed that it takes 10 seconds at typical moving speed for the shopper SC who stands in the second entrance lane AL2 to move to the farthest cash register number R2, the procedure of the information processing shown in FIG 12 and FIG. 13 is executed every 10 seconds. Thus, the introductory display on the first display surface DS1 and the second display surface DS2 based on new unoccupied cash register detection is updated every 10 seconds.

Further, the shopper SC who looks at the introduction of the unoccupied cash register on the first display surface DS1 or the second display surface DS2 moves from the first entrance lane AL1 or the second entrance lane AL2 to the unoccupied cash register with the cash register number R1 or R9 thus displayed. When continuing such an introductory display as shown in FIG. 15 or FIG. 16 during this move, the next shopper SC starts moving to the same cash register. Therefore, it is possible to update the display in response to the start of the move of the shopper SC to the unoccupied cash register with the cash register number R1 or R9 in such a manner that the unoccupied cash register number display FN11 or FN21 is deleted and the unoccupied cash register number display FN12 or FN22 is displayed at the left end. The start of the move of the shopper SC may be determined by, for example, detecting passage of the shopper SC with sensors or the like disposed at respective entrances of the payment place CE as the exits of the first entrance lane AL1 and the second entrance lane AL2. Further, when the new shopper SC further starts the move based on the introductory display thus updated, the display of the unoccupied cash register number display FN12 or FN22 is also deleted, and then it is displayed that the detection of an unoccupied cash register is in progress.

In the checkout apparatus CT with the cash register number R5 which is used as a substitute for the checkout apparatus CT assigned to the information terminal use despite the checkout apparatus CT is originally assigned to the self use, when the checkout by the shopper SC is completed, then the shopper SC moves away from that checkout apparatus CT, and thus, that checkout apparatus CT turns to an unoccupied cash register, this fact is detected in ACT2. Thus, the process proceeds to ACT20 from ACT2, it is determined in ACT20 that the assignment is changed, and in ACT21, the checkout apparatus CT with the cash register number R5 becomes available for the self use which is the initial assignment. Obviously, depending on the status of unoccupied cash registers at that moment, there is a possibility that the checkout apparatus CT with the cash register number R5 is used again as a substitute for the information terminal use checkout apparatus CT in a processing procedure which proceeds to ACT3 from ACT21.

As described above, according to the guide system relate to the first embodiment, in the checkout system in which the plurality of checkout apparatuses CT which can use the first settlement method of performing the registration of the purchased article and the settlement of the purchased article with operations by, for example, the self use customer, and the second settlement method of performing the settlement of the purchased article pre-registered with operation of the information terminal IT by, for example, the pre-registration customer is installed in the payment place CE, the display device DD as the introduction device which introduces the available checkout apparatus to, for example, the customer, and the store server SS as the management device for managing the introduction of the available checkout apparatus CT by the display device DD are provided. The store server SS determines the checkout apparatus CT which is available for each of the first and second settlement methods based on the checkout apparatus class which is the assignment of the first settlement method and the second settlement method to the method used in each of the checkout apparatuses CT set in advance, the priority order set in advance such as the cash-register introduction priority order or the in-class cash-register-full configuration as the full-state priority order, the unoccupied status of the checkout apparatus CT, and the settlement wait status in each of the first and second settlement methods, and then makes the display device DD introduce the result.

Therefore, according to the guide system related to the first embodiment, for example, in the mixed flow payment of the self use customers and the pre-registration customers, it is possible to introduce the checkout apparatus appropriate for each as the unoccupied cash register, and therefore, it becomes possible to guide the customers to appropriate checkout apparatuses without requiring the personnel.

Further, the checkout system is further provided with the first lane camera CM1 as the first sensor for detecting the number of customers who wait for settlement with the first settlement method, and the second lane camera CM2 as the second sensor for detecting the number of customers who wait for settlement with the second settlement method, and the store server SS detects the settlement wait status in each of the first and second settlement methods based on the detection result in each of the first and second lane cameras CM1, CM2.

Therefore, according to the guide system related to the first embodiment, by detecting the number of the customers who are going to use the checkout apparatus CT with each of the settlement methods from the image taken by the camera, it is possible to easily detect the settlement wait status.

Alternatively, in the checkout system according to the first embodiment, the store server SS assumes the number of the completions of the pre-registration in the operations of the information terminals IT by the pre-registration customers as the number of the customers who wait for the settlement with the second settlement method to detect the settlement wait status with the second settlement method.

Therefore, according to the guide system related to the first embodiment, it is possible to easily detect the number of the customers who are going to use the checkout apparatuses CT with the second settlement method without using the camera.

Further, the guide system in the first embodiment includes the first and second display surfaces DS1, DS2 as the introduction device, and the store server SS makes the first display surface DS1 display, for example, the unoccupied cash register number displays FN11, FN12 as the first display information representing the checkout apparatuses which are available for the first settlement method, and makes the second display surface DS2 display, for example, the unoccupied cash register number displays FN21, FN22 as the second display information representing the checkout apparatuses which are available for the second settlement method.

Therefore, according to the guide system related to the first embodiment, it is possible to introduce the respective unoccupied cash registers separately for the respective settlement methods.

Here, the guide system includes the first display device DD having the first display surface DS1 and the second display device DD having the second display surface DS2 as the introduction device, the first display device DD is disposed in the first entrance lane AL1 which is the first standby lane for cash payment out of the standby lanes which are separately provided respectively for the cash payment and cashless payment, and in which the shoppers SC wait for settlement, and the second display device DD is disposed in the second entrance lane AL2 as the second standby lane for the cashless payment.

Therefore, according to the guide system related to the first embodiment, in each of the entrance lanes separately provided to the respective settlement methods, it is possible to display the unoccupied cash registers used in that settlement method.

Further, the store server SS as the management device according to the first embodiment is provided with the use status detection unit 113 as the first detection unit which detects an unoccupied status of each of the checkout apparatuses CT which can use the first settlement method of performing the registration of the purchased article and the settlement of the purchased article with operations of, for example, the self use customer, and the second settlement method of performing the settlement of the purchased article which is pre-registered with operations of the information terminal IT by, for example, the pre-registration customer, the wait status detection unit 114 is as the second detection unit which detects a settlement wait status in each of the first and second settlement methods based on the number of the customers who wait for the settlement with the first settlement method and the number of the customers who wait for the settlement with the second settlement method, the assignment change unit 115 as the assignment unit which determines the checkout apparatus CT available for each of the first and second settlement methods based on the checkout apparatus class as the assignment of the first settlement method and the second settlement method to the method used in each of the checkout apparatuses CT, the priority order set in advance such as the cash-register introduction priority order as the priority order in the assignment or the cash-register-full configuration as the full-state priority order, the unoccupied status of the checkout apparatus CT detected by the use status detection unit 113, and the settlement wait status in each of the first and second settlement methods detected by the wait status detection unit 114, and the introduction unit 116 as the output unit which outputs the first introductory information representing the checkout apparatus CT available for the first settlement method and the second introductory information representing the checkout apparatus CT available for the second settlement method determined by the assignment change unit 115 to the display device DD as the external device.

Therefore, according to the store server SS related to the first embodiment, for example, in the mixed flow payment of the self use customers and the pre-registration customers, it is possible to introduce the checkout apparatus appropriate for each as the unoccupied cash register, and therefore, it becomes possible to guide the customers to appropriate checkout apparatuses without requiring the personnel.

### [Second Embodiment]

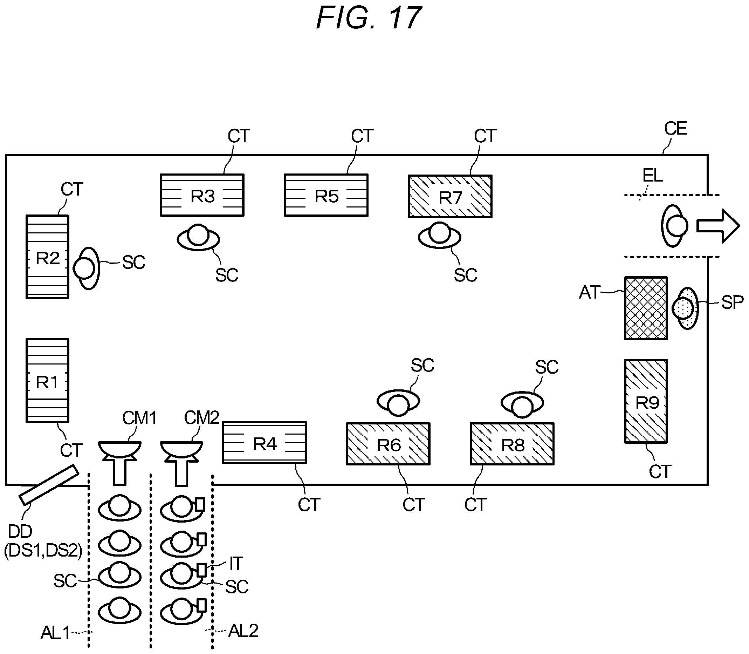

FIG. 17 is a schematic diagram showing an example of the payment place CE to which a guide system according to a second embodiment is applied. In the first embodiment, the entrance for the self use customers and the entrance for the pre-registration customers are set separately from each other, and the entrance lanes are disposed in the respective entrances. The present second embodiment is an example in which two entrance lanes, namely the first and second entrance lanes AL1, AL2, are disposed in a single entrance.

In such an installation layout in the payment place CE, it is possible to install totally two display devices DD respectively for the first and second entrance lanes AL1, AL2 independently of each other. Further, as shown in FIG. 17, it is possible to adopt a single display device DD alone. In this case, the single display device DD is provided with the first and second display surfaces DS1, DS2.

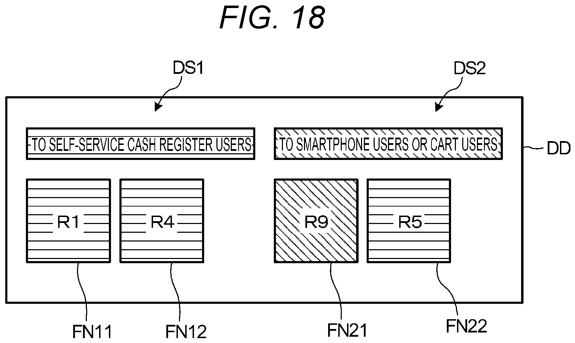

FIG. 18 is a diagram showing a display example of the first and second display surfaces DS1, DS2 in this display device DD. As shown in FIG. 18, the display screen of the display device DD is divided, and the two display surfaces DS1, DS2 are displayed side by side.

As described above, even when adopting the display method in which the display screen of the display device DD is divided into a plurality of display parts, it is possible for the management device configured as the guide system and the store server SS to obtain substantially the same advantages as those of the first embodiment.

### [Third Embodiment]

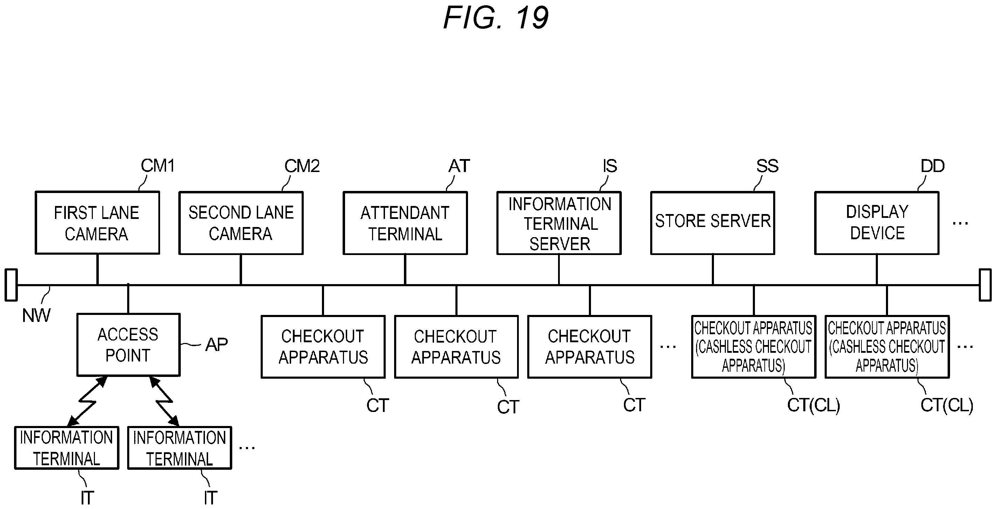

FIG. 19 is a schematic configuration diagram showing a guide system according to a third embodiment. In the guide system according to the third embodiment, a cashless checkout apparatus CL is included as the checkout apparatus CT. Specifically, as types of the checkout apparatus CT, there can be cited a cashless settlement self-service checkout apparatus, and a self-service checkout apparatus having a checkout function in which payment can be achieved by both of cash and cashless in which cash is not used. The cashless checkout apparatus CL corresponds to the cashless settlement self-service checkout apparatus out of these. The self-service checkout apparatus is an example of a first checkout apparatus which is included by the checkout apparatuses CT, and is capable of accepting the cash settlement and the cashless settlement. The cashless checkout apparatus CL is an example of a second checkout apparatus which is included by the checkout apparatuses CT, and is capable of accepting only the cashless settlement. It should be noted that the cashless settlement includes a credit card settlement, an electronic money settlement, a point settlement, a code settlement, and so on.

The configuration of the checkout apparatus CT shown in FIG. 6 corresponds to the self-service checkout apparatus also available for the cash settlement. The cashless checkout apparatus CL does not handle cash, and therefore, does not have the automatic change dispenser 27 in this configuration.

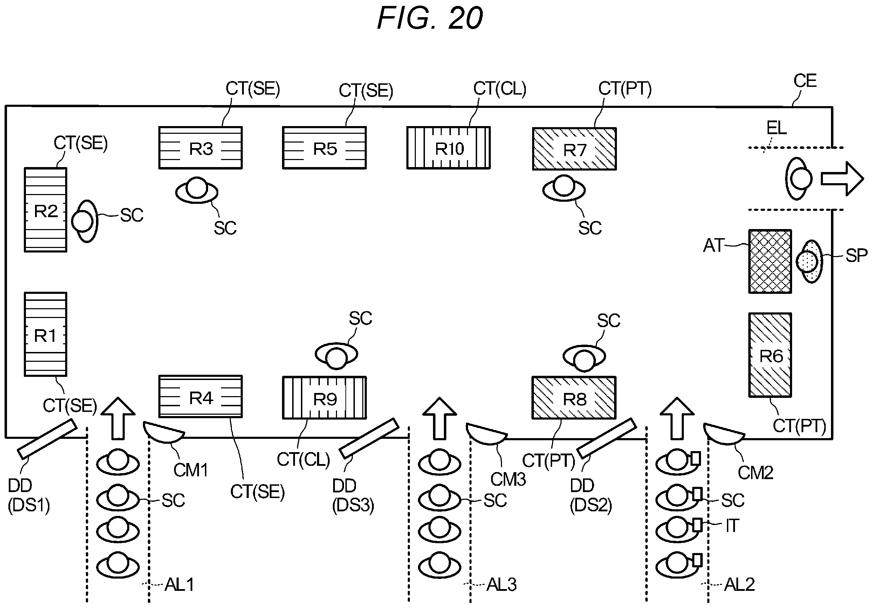

FIG. 20 is a schematic diagram showing an example of the payment place CE to which the guide system according to the third embodiment is applied. In the example shown in FIG. 20, totally ten self-service checkout apparatuses CT including the two cashless checkout apparatuses CL are installed in the payment place CE. It should be noted that cash register numbers R1 to R10 for uniquely identifying the checkout apparatuses CT are assigned to the ten checkout apparatuses CT. The cash register numbers R1 to R10 can be assigned as appropriate by the administrator of the store server SS. Although not limited thereto, the configuration and the operation are hereinafter described based on the number and the installation layout of the checkout apparatuses CT in the payment place CE.

The payment place CE is provided with an entrance for cashless customers who check out in cashless. Specifically, in the payment place CE, a third entrance lane AL3 where the cashless customers who check out in cashless stand waiting for checkout is disposed in addition to the first and second entrance lanes AL1, AL2 described in the first embodiment. The cashless customers who check out in cashless can exist in both the self use customers and the pre-registration customers, and therefore, in the example shown in FIG. 20, the third entrance lane AL3 is disposed between the first entrance lane AL1 and the second entrance lane AL2, but this location is not particularly required. Similarly to the first and second entrance lanes AL1, AL2, the third entrance lane AL3 is also provided with a third lane camera CM3 and a single display device DD. It should be noted that in FIG. 20, the checkout apparatuses CT are shown with the reference symbols attached, respectively, in order to make it possible to distinguish the self-service checkout apparatuses assigned to the cash customers, the cashless checkout apparatuses CL which do not have the automatic change dispenser 27, and the self-service checkout apparatuses assigned to the pre-registration customers from each other.

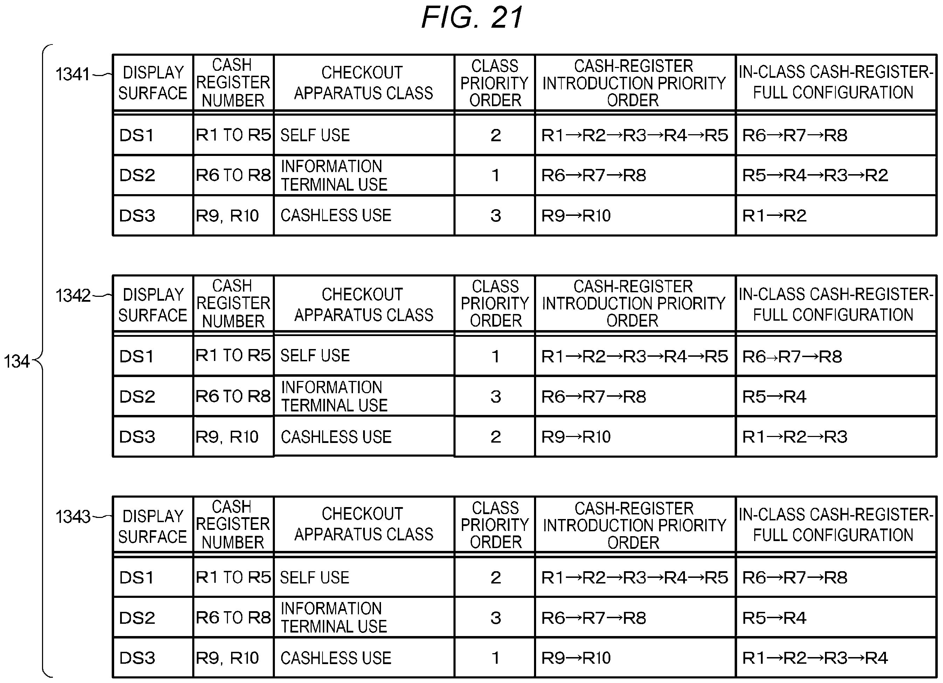

FIG. 21 is a schematic diagram showing a principal data structure to be stored in the guide configuration table 134 provided to the store server SS as the management device according to the third embodiment. Although not limited thereto, the guide configuration table 134 stores three configuration tables, namely first to third configuration tables 1341, 1342, and 1343, in the present embodiment. Each of the configuration tables 1341 to 1343 has substantially the same data structure as that of the guide configuration table 134 described in the first embodiment. In the store server SS, one of these configuration tables 1341 to 1343 is selectively used in accordance with the settlement wait status in each of the first and second settlement methods. Specifically, the store server SS detects the settlement wait status based on the first number of the customers who wait for the settlement in cash with the first settlement method, the second number of the customers who wait for the settlement in cashless with the first settlement method, and the third number of the customers who wait for the settlement with the second settlement method, and then selects one of the configuration tables 1341 to 1343 based on the result thereof. In other words, one of these configuration tables 1341 to 1343 in accordance with the number of the customers who stand in the entrance lanes AL1 to AL3 waiting for checkout.

The first configuration table 1341 is a table which is selected when the number of the customers who wait for checkout decreases in the order of the pre-registration customers, the cash customers, and the cashless customers. Therefore, the class priority order is set to this order. Similarly to the first embodiment, in the present embodiment, it is assumed that the display device DD and the display surface are in a one-to-one relationship, and the display device DD installed so as to correspond to the third entrance lane AL3 in which the cashless customers stand waiting for checkout is set as the third display surface DS3.

In the example of this first configuration table 1341, regarding the checkout apparatuses CT (SE) assigned to the self use, an order of the cash register number R1, the cash register number R2, the cash register number R3, the cash register number R4, and the cash register number R5 is set as the cash-register introduction priority order, and an order of the cash register number R6, the cash register number R7, and the cash register number R8 as the checkout apparatuses CT (PT) assigned to the information terminal use is set as the in-class cash-register-full configuration which is the configuration when those checkout apparatuses CT become full. It should be noted that the cash register numbers R9, R10 assigned to the cashless use are not set in the in-class cash-register-full configuration. This is because the cashless checkout apparatus CL cannot be a substitute for the checkout apparatus CT for the self use in which there is a possibility of cash payment since the cash payment cannot be accepted in the cashless checkout apparatus CL.

Further, regarding the checkout apparatuses CT assigned to the information terminal use, an order of the cash register number R6, the cash register number R7, and the cash register number R8 is set as the cash-register introduction priority order, and an order of the cash register number R5, the cash register number R4, the cash register number R3, the cash register number R2, and the cash register number R1 as the checkout apparatuses CT assigned to the self use is set as the in-class cash-register-full configuration. Also in this in-class cash-register-full configuration, the cash register numbers R9, R10 assigned to the cashless use are not set.

Further, regarding the checkout apparatuses CT which are the cashless checkout apparatuses CL assigned to the cashless use, an order of the cash register number R9 and the cash register number R10 is set as the cash-register introduction priority order, and an order of the cash register number R1 and the cash register number R2 as the checkout apparatuses CT assigned to the self use is set as the in-class cash-register-full configuration. It should be noted that the reason that the checkout apparatuses CT assigned to the self use are assigned first in the cash-register-full in class is that the self use is lower in the priority order than the information terminal use.

The second configuration table 1342 is a table which is selected when the number of the customers who wait for checkout decreases in the order of the cash customers, the cashless customers, and the pre-registration customers. The second configuration table 1342 is different from the first configuration table 1341 in the class priority order and the in-class cash-register-full configuration. As the in-class cash-register-full configuration, an order of the cash register number R6, the cash register number R7, and the cash register number R8 assigned to the information terminal use is set with respect to the checkout apparatuses CT assigned to the self use, and an order of the cash register number R5 and the cash register R4 as the checkout apparatuses CT assigned to the self use is set with respect to the checkout apparatuses assigned to the information terminal use. Further, regarding the checkout apparatuses CT as the cashless checkout apparatuses CL assigned to the cashless use, an order of the cash register number R1, the cash register number R2, and the cash register number R3 as the checkout apparatuses CT assigned to the self use is set.

The third configuration table 1343 is a table which is selected when the number of the customers who wait for checkout decreases in the order of the cashless customers, the cash customers, and the pre-registration customers. The third configuration table 1343 is different from the first and second configuration table 1341, 1342 in the class priority order and the in-class cash-register-full configuration. As the in-class cash-register-full configuration, the third configuration table 1343 is the same as the second configuration table 1342 in the checkout apparatuses CT assigned to the self use and the checkout apparatuses CT assigned to the information terminal use. Further, regarding the checkout apparatuses CT as the cashless checkout apparatuses CL assigned to the cashless use, an order of the cash register number R1, the cash register number R2, the cash register number R3, and the cash register number R4 as the checkout apparatuses CT assigned to the self use is set.

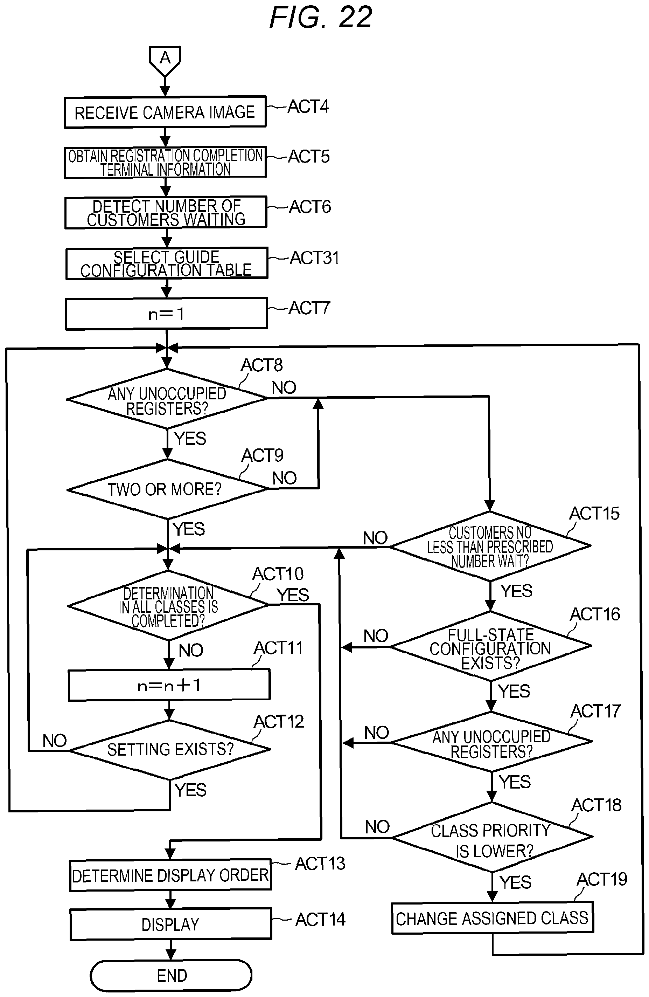

FIG. 22 is a flowchart representing a procedure of an essential part of information processing to be executed by the processor 11 of the store server SS in the third embodiment. Only the portion in which the third embodiment is different from the first embodiment will be described. In the present third embodiment, in ACT6, the wait status detection unit 114 installed in the processor 11 detects the number of the customers who stand in each of the first to third entrance lanes AL1 to AL3 based on the camera image received and the registration completion terminal information obtained. Further, as ACT31, one of the first to third configuration tables 1341 to 1343 of the guide configuration table 134 is selected based on the number of the standby customers thus detected. Subsequent processing is as described in the first embodiment except the fact that the guide configuration table used therein is changed.

As described above, according to the guide system relate to the third embodiment, the checkout apparatuses CT include the self-service checkout apparatuses CT (SE) as the first checkout apparatuses which can accept the cash settlement and the cashless settlement, and the cashless checkout apparatuses CT (CL) as the second checkout apparatuses which can accept only the cashless settlement, and the store server SS as the management device uses the assignment of the cash settlement method, the cashless settlement method, and the second settlement method to the method used in each of the plurality of checkout apparatuses CT as the assignment, and detects the settlement wait status based on the first number of the standby customers who wait for the cash settlement, the second number of the standby customers who wait for the cashless settlement, and the third number of the standby customers who wait for the settlement with the second settlement method.

Therefore, according to the store server SS related to the third embodiment, even when introducing the cashless checkout apparatuses CL for the cashless customers who check out in cashless, it is possible to introduce the checkout apparatus appropriate for each as the unoccupied cash register, and therefore, it becomes possible to guide the customers to appropriate checkout apparatuses without requiring the personnel.

It should be noted that it is obvious that it is possible to make the plurality of entrance lanes AL1 to AL3 correspond to a single entrance regarding the present embodiment as in the second embodiment.

The embodiments of the guide system and the management device are hereinabove described, but such embodiments are not limited thereto.

For example, it is possible to make the cashless checkout apparatuses CL assignable to the self use customers and the pre-registration customers.

Further, it is assumed that the number of the customers who wait for checkout in each of the entrance lanes is detected from the camera image, it is possible to detect the number of the customers using an optical sensor or a temperature sensor as a sensor other than the camera. For example, such a sensor is disposed at a position corresponding to a prescribed number of customers in each of the entrance lanes, and when a human is detected by that sensor, it is possible to detect that the number of the customers who wait for checkout is the prescribed number of the customers.

Further, in the embodiments, the description is presented citing the self-service type checkout system in which the shopper executes the article registration with the checkout apparatus CT or the information terminal IT as an example, but it is possible for the checkout apparatuses CT to include a semi-self-service type checkout apparatus in which the sales clerk performs the article registration, and the shopper performs the checkout processing on the transaction data of the purchased article on which the sales clerk performed the article registration. Alternatively, it is assumed that the sales clerk performs the article registration with a registration device in a registration place provided separately from the payment place CE, and it is possible for the checkout apparatus disposed in the payment place CE to be the checkout apparatus for accepting only the checkout of the shopper based on the transaction data. The checkout apparatus CT in this case can be the checkout apparatus CT assigned to the information terminal use. In other words, the pre-registration of the purchased article in the second settlement method of performing the settlement of the purchased article thus pre-registered can include the registration device operated by the sales clerk in addition to the information terminal IT operated by the shopper.

Further, in the first and third embodiments, it is assumed that a single display device DD is installed in each of the entrance lanes, but it is possible to install a plurality of display devices DD in each of the entrance lanes. Similarly, in the second embodiment, it is assumed that a single display device DD is installed collectively in a plurality of lanes, but it is possible to install a plurality of display devices DD in the plurality of lanes in a lump.

Further, it is possible to arrange that a sales clerk is assigned to the entrance of the payment place CE, and the sales clerk orally introduces the checkout apparatus CT to the shoppers. In this case, it is sufficient for the display device DD to be installed at a position where the unoccupied cash register (an occupied apparatus) can be introduced to the clerk instead of the shopper.

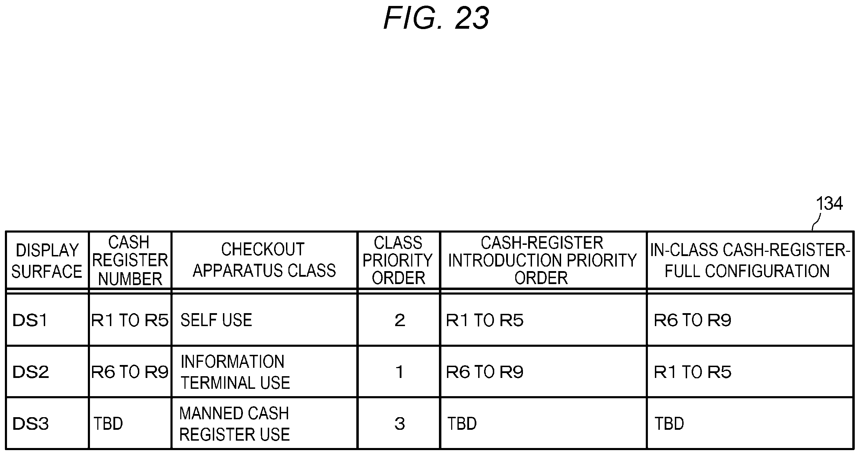

Further, the priority order set to each of the configuration items of the cash-register introduction priority order and the in-class cash-register-full configuration in the guide configuration table 134 is not necessary required for an administrator to designate the order. As shown in FIG. 23, it is possible to arrange that, for example, the administrator only selects whether to set the cash register number or leave it unset, and the processor 11 of the store server SS randomly determines which one of the unoccupied cash registers is selected. This is because, there may be an operation in which it is not necessary to designate the priority order for each of the cash registers depending on the layout of the payment place CE. Further, by arranging that the checkout apparatuses CT are randomly determined in such a manner, it is possible to homogenize the use frequency of the checkout apparatuses CT, and thus, it becomes possible to avoid the fatigue of a specific checkout apparatus CT. This is helpful in reducing the failure occurrence risk in particular in a mechanical movable part in the automatic change dispenser 17, the card reader 28, and so on.

Alternatively, it is also possible to arrange that the processor 11 randomly determines the priority order from the cash register numbers thus set. In this case, it is possible for the processor 11 to periodically change the order set randomly as described above. Since the higher the priority order of the checkout apparatus is the higher the chance of use of that checkout apparatus is, by periodically changing the priority order as described above, it is possible to prevent the use frequencies of the respective checkout apparatuses from being uneven.

Further, in each of the embodiments, it is assumed that the store server SS determines the use status of each of the checkout apparatuses CT based on the presence or absence of the human detection notice transmitted from that checkout apparatus CT, but it is possible to determine the use status using other information in stead thereof, or in addition thereto. For example, since the attendant terminal AT collects the statuses representing the operation status and the error status in each of the checkout apparatuses CT, the store server SS can know the use status of each of the checkout apparatuses by obtaining the status information of each of the checkout apparatuses from the attendant terminal AT.

In addition, although some embodiments of the present disclosure are described, these embodiments are illustrative only, and it is not intended to limit the scope of the present disclosure. These novel embodiments can be implemented with other various aspects, and a variety of omissions, replacements, and modifications can be made within the scope or the spirit of the present disclosure. These embodiments and modifications thereof are included in the scope of the present disclosure, and at the same time, included in the present disclosure set forth in the appended claims, and the equivalents thereof.

## Claims

1. A guide system, comprising:
a plurality of checkout apparatuses configured to use a first settlement method of performing registration of a purchased article and a settlement of the purchased article, and a second settlement method of performing a settlement of a pre-registered purchased article;
an introduction device configured to introduce an available checkout apparatus from the plurality of checkout apparatuses; and
a management device configured to manage the introduction of the available checkout apparatus with the introduction device, wherein
the management device is further configured to determine checkout apparatuses available for the respective first and second settlement methods based on
assignment of the first settlement method and the second settlement method to a method used in each of the checkout apparatuses set in advance,
a priority order set in advance,
an unoccupied state of a checkout apparatus, and
a settlement wait status in each of the first and second settlement methods, and
make the introduction device introduce the available checkout apparatus.

2. The guide system according to claim 1, further comprising:
a first sensor configured to detect a number of people waiting for settlement with the first settlement method; and
a second sensor configured to detect a number of people waiting for settlement with the second settlement method, wherein
the management device detects the settlement wait status in each of the first and second settlement methods based on a detection result from each of the first and second sensors.

3. The guide system according to claim 1 or 2, wherein
the management device is further configured to assume a number of completions of the pre-registration as the number of the people waiting for the settlement with the second settlement method to detect the settlement wait status of the second settlement method.

4. The guide system according to any one of claims 1 to 3, wherein
the introduction device includes a first display surface and a second display surface, and
the management device is further configured to
make the first display surface display first display information representing the checkout apparatus available for the first settlement method, and
make the second display surface display second display information representing the checkout apparatus available for the second settlement method.

5. The guide system according to any one of claims 1 to 4, wherein
the checkout apparatuses available for the first settlement method include a first checkout apparatus configured to accept a cash settlement and a cashless settlement, and a second checkout apparatus configured to accept only the cashless settlement, and
the management device is further configured to
use assignment of the cash settlement method, the cashless settlement method, and the second settlement method to a method used in each of the checkout apparatuses as the assignment set in advance, and
detect the settlement wait status based on a first number of people waiting for the cash settlement, a second number of people waiting for the cashless settlement, and a third number of people waiting for the settlement with the second settlement method.

6. The guide system according to any one of claims 1 to 5, wherein
the plurality of checkout apparatuses comprises a plurality of self-service checkout apparatuses.

7. A management device (SS) , comprising:
a first detection component configured to detect an unoccupied status of each of a plurality of checkout apparatuses configured to use a first settlement method of performing registration of a purchased article and a settlement of the purchased article with a customer operation, and a second settlement method of performing a settlement of a pre-registered purchased article;
a second detection component configured to detect a settlement wait status in each of the first and second settlement methods based on a number of people waiting for the settlement with the first settlement method and a number of people waiting for the settlement with the second settlement method;
an assignment component configured to determine the checkout apparatus available for the first settlement method and the checkout apparatus available for the second settlement method based on assignment of the first settlement method and the second settlement method to a method used in each of the plurality of checkout apparatuses set in advance, a priority order set in advance, an unoccupied status of the checkout apparatuses detected by the first detection component, and the settlement wait status in each of the first and second settlement methods detected by the second detection component; and
an output component configured to output first introductory information representing the checkout apparatus available for the first settlement method determined by the assignment component, and second introductory information representing the checkout apparatus available for the second settlement method determined by the assignment component to an external device.

8. The management device according to claim 7, further comprising:
a first sensor configured to detect a number of people waiting for settlement with the first settlement method; and
a second sensor configured to detect a number of people waiting for settlement with the second settlement method, wherein
the management device detects the settlement wait status in each of the first and second settlement methods based on a detection result from each of the first and second sensors.

9. The management device according to claim 7 or 8, wherein
the management device is configured to assume a number of completions of the pre-registration as the number of the people waiting for the settlement with the second settlement method to detect the settlement wait status of the second settlement method.

10. The management device according to any one of claims 7 to 9, wherein the management device is configured to
make a first display surface display first display information representing the checkout apparatus available for the first settlement method, and
make a second display surface display second display information representing the checkout apparatus available for the second settlement method.

11. The management device according to claim 7, wherein
the checkout apparatuses available for the first settlement method include a first checkout apparatus configured to accept a cash settlement and a cashless settlement, and a second checkout apparatus configured to accept only the cashless settlement, and
the management device is configured to
use assignment of the cash settlement method, the cashless settlement method, and the second settlement method to a method used in each of the checkout apparatuses as the assignment set in advance, and
detect the settlement wait status based on a first number of people waiting for the cash settlement, a second number of people waiting for the cashless settlement, and a third number of people waiting for the settlement with the second settlement method.

12. The management device according to any one of claims 7 to 11, wherein
the plurality of checkout apparatuses comprises a plurality of self-service checkout apparatuses.

13. A method for controlling a management device which includes a processor and a memory, and which is connected to a plurality of checkout apparatuses which are configured to use a first settlement method of performing registration of a purchased article and a settlement of the purchased article, and a second settlement method of performing a settlement of a pre-registered purchased article, and an introduction device configured to introduce an available checkout apparatus via a network, and which is configured to manage the introduction by the introduction device, the method comprising:
detecting an unoccupied status of each of the plurality of checkout apparatuses configured to use the first settlement method of performing the registration of the purchased article and the settlement of the purchased article, and the second settlement method of performing the settlement of the pre-registered purchased article;
detecting a settlement wait status in each of the first and second settlement methods based on a number of people waiting for the settlement with the first settlement method and a number of people waiting for the settlement with the second settlement method;
determining the checkout apparatus available for the first settlement method and the checkout apparatus available for the second settlement method based on assignment of the first settlement method and the second settlement method to a method used in each of the plurality of checkout apparatuses stored in advance in the memory, a priority order stored in advance in the memory, an unoccupied status of the checkout apparatuses detected in the detecting the unoccupied status of each of the plurality of checkout apparatuses, and the settlement wait status in each of the first and second settlement methods detected in the detecting the settlement wait status in each of the first and second settlement methods; and
outputting first introductory information representing the checkout apparatus available for the first settlement method and the second introductory information representing the checkout apparatus available for the second settlement method determined by the introduction device.

14. The method according to claim 13, further comprising:
detecting a number of people waiting for settlement with the first settlement method using a first sensor;
detecting a number of people waiting for settlement with the second settlement method using a second sensor; and
detecting the settlement wait status in each of the first and second settlement methods based on a detection result from each of the first and second sensors.

15. The method according to claim 13 or 14, further comprising:
assuming a number of completions of the pre-registration as the number of the people waiting for the settlement with the second settlement method to detect the settlement wait status of the second settlement method.
